(19) Europäisches Patentamt / European Patent Office / Office européen des brevets

(11) **EP 4 145 173 B1**

(12) **FASCICULE DE BREVET EUROPEEN**

(45) Date de publication et mention de la délivrance du brevet:
**19.06.2024 Bulletin 2024/25**

(21) Numéro de dépôt: **22191985.5**

(22) Date de dépôt: **24.08.2022**

(51) Classification Internationale des Brevets (IPC):
***G01S 13/42*** $^{(2006.01)}$ ***G01S 13/72*** $^{(2006.01)}$
***G01S 7/04*** $^{(2006.01)}$ *G01S 13/02* $^{(2006.01)}$
*G01S 13/44* $^{(2006.01)}$

(52) Classification Coopérative des Brevets (CPC):
**G01S 13/426; G01S 7/04; G01S 13/72;**
G01S 13/4463; G01S 2013/0254; G01S 2013/0272

(54) **PROCÉDÉ DE DÉCISION ET D ÉVALUATION D ENTRELACEMENT D'UNE PLURALITÉ DE MODES RADAR, PROGRAMME D ORDINATEUR ET DISPOSITIF ASSOCIÉS**

VERFAHREN ZUR ENTSCHEIDUNG UND BEWERTUNG DES INTERLACING EINER VIELZAHL VON RADARMODES, ENTSPRECHENDES COMPUTERPROGRAMM UND ENTSPRECHENDE VORRICHTUNG

METHOD FOR DECIDING AND ASSESSING THE INTERLEAVING OF A PLURALITY OF RADAR MODES, ASSOCIATED COMPUTER PROGRAM AND DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.08.2021 FR 2108888**

(43) Date de publication de la demande:
**08.03.2023 Bulletin 2023/10**

(73) Titulaire: **THALES**
**92400 Courbevoie (FR)**

(72) Inventeurs:
- **LEGRAND, Léo**
  **33700 MERIGNAC (FR)**
- **LEGER, Nicolas**
  **33700 MERIGNAC (FR)**
- **CORRETJA, Vincent**
  **33700 MERIGNAC (FR)**

(74) Mandataire: **Lavoix**
**2, place d'Estienne d'Orves**
**75441 Paris Cedex 09 (FR)**

(56) Documents cités:
**EP-A1- 3 236 281 WO-A1-2018/067221**
**FR-A1- 2 832 809**

- **MATHIEU KLEIN ET AL: "AI-Augmented Multi Function Radar Engineering with Digital Twin: Towards Proactivity", ARXIV.ORG, CORNELL UNIVERSITY LIBRARY, 201 OLIN LIBRARY CORNELL UNIVERSITY ITHACA, NY 14853, 18 juin 2020 (2020-06-18), XP081700388,**
- **KEMKEMIAN STEPHANE ET AL: "Cognitive Optimization of Multitasking Detection for 2D E-Scan Airborne Surveillance Radar", 2019 IEEE INTERNATIONAL SYMPOSIUM ON PHASED ARRAY SYSTEM & TECHNOLOGY (PAST), IEEE, 15 octobre 2019 (2019-10-15), pages 1-8, XP033732277, DOI: 10.1109/PAST43306.2019.9021073**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 4 145 173 B1

## Description

La présente invention concerne un procédé de décision et d'évaluation d'entrelacement d'une pluralité de modes radar d'au moins un radar propre à être embarqué à bord d'un véhicule, notamment un aéronef, ou propre à être mis en oeuvre à bord d'un dispositif de simulation du comportement dudit véhicule, ledit procédé étant mis en oeuvre par un dispositif électronique de décision et d'évaluation d'entrelacement de modes radar, le procédé comprenant les étapes successives suivantes :

- obtention d'une mission radar à effectuer, ladite mission comprenant au moins un objectif à remplir ;
- détermination, selon un premier jeu de contraintes prédéterminé, de modes radar propres à répondre à au moins un objectif de ladite mission radar.

L'invention concerne également un programme d'ordinateur associé.

L'invention concerne également un dispositif électronique de décision et d'évaluation d'entrelacement d'une pluralité de modes radar d'au moins un radar propre à être embarqué à bord d'un véhicule, notamment un aéronef, ou propre à être mis en oeuvre à bord d'un dispositif de simulation du comportement dudit véhicule.

L'invention se situe dans le domaine des systèmes actifs de surveillance. En particulier, la présente invention porte sur des systèmes actifs de surveillance utilisant au moins un radar à balayage mécanique et/ou à balayage électronique, notamment pour une surveillance maritime aéroportée, et s'applique à l'utilisation dudit au moins un radar en cours de mission, notamment en en vol à bord d'un aéronef, ou à tout dispositif de préparation de mission, d'entraînement ou encore de simulation du comportement du véhicule à bord duquel un tel système actif de surveillance à base de radar(s) est embarqué.

Plus précisément, la présente invention porte sur l'entrelacement de modes radar, requis lorsque les objectifs d'une mission de surveillance ne peuvent être entièrement remplis sans le recours à plusieurs modes radar, et notamment pour mettre en oeuvre un partage de temps radar pour satisfaire au mieux des fonctions de veille ou encore de pistage. Les possibilités d'entrelacement ont notamment évolué en termes de degré de liberté avec l'arrivée des radars à balayage électronique et/ou l'emploi coordonné de plusieurs radars pour optimiser le partage des tâches et des ressources.

Jusqu'ici des solutions génériques ont été développées pour optimiser l'ordonnancement des tâches d'un radar et réguler sa charge, et ce notamment pour la gestion des figures de balayage voire les pointages du radar. Le document WO2018/067221 A1 divulgue une méthode pour planifier des missions radar et pour prédire les performances du radar lors de ces missions.

Toutefois, ces solutions ne répondent pas aux besoins spécifiques identifiés dans un contexte de surveillance maritime par au moins un radar aéroporté où les tâches ne sont pas nécessairement associées à des pointages de radar(s), la navigation de l'aéronef étant propre à influencer la décision d'entrelacement.

En particulier, dans le contexte de la surveillance aéroportée, notamment maritime, l'entrelacement doit être compatible de contraintes diverses telles que : la figure de balayage du radar, c'est-à-dire la succession temporelle des régions spatiales éclairées par le radar, propre à être libre ou contrainte, l'entrelacement de formes d'ondes non-doppler, doppler ou autres imposant des impératifs spécifiques de revisite de l'espace, la nécessité, lorsque le dispositif de surveillance à base de radar(s) est embarqué, de s'exécuter sur des calculateurs numériques aux ressources potentiellement restreintes, en termes de puissance de calcul, mémoire, consommation d'énergie, temps d'exécution, stabilité d'exécution, la contrainte des possibilités d'entrelacement associée à la gestion d'une région de surveillance au moyen d'un système multi-panneaux selon des modalités d'alimentation électrique, de refroidissement du radar, une requête opérateur, etc.

De plus, la trajectoire du véhicule porteur dispositif de surveillance à base de radar(s) est également propre à être prise en compte comme une opportunité ou au contraire une contrainte.

Ainsi, la décision d'entrelacement de modes radar est un problème d'optimisation combinatoire, parfois dépourvu de solution selon les modes radar d'utilisation désirée.

L'invention a pour objet de remédier aux inconvénients de l'état de la technique en proposant une technique alternative de décision et d'évaluation d'entrelacement d'une pluralité de modes radar d'au moins un radar propre à être embarqué à bord d'un véhicule propre à répondre à la problématique de la surveillance maritime aéroportée en choisissant automatiquement un entrelacement de modes radar, tout en présentant un caractère à la fois intelligent pour la prise de décision d'un tel entrelacement en ayant notamment recours à l'intelligence artificielle, et « explicable » pour la compréhension ou l'interaction avec l'opérateur parfois dépourvu de connaissance en intelligence artificielle.

Par « explicable », on entend que la mise en oeuvre du procédé selon la présente invention est compréhensible et/ou interprétable/justifiable d'un point de vue opérationnel.

A cet effet, l'invention propose un procédé de décision et d'évaluation d'entrelacement d'une pluralité de modes radar d'au moins un radar propre à être embarqué à bord d'un véhicule, notamment un aéronef, ou propre à être mis en oeuvre à bord d'un dispositif de simulation du comportement dudit véhicule, ledit procédé étant mis en oeuvre par un dispositif électronique de décision et d'évaluation d'entrelacement de modes radar, le procédé comprenant les étapes successives suivantes :

- obtention d'une mission radar à effectuer, ladite mission comprenant au moins un objectif à remplir ;
- détermination, selon un premier jeu de contraintes prédéterminé, de modes radar propres à répondre à au moins un objectif de ladite mission radar ;

le procédé comprenant en outre les étapes successives et hiérarchisées suivantes :

- détermination d'une valeur d'utilité, par secteur radar à couvrir, représentative de l'utilité pour chaque objectif de ladite mission associée à chacun desdits modes fournis par l'étape de détermination de modes radar ;
- au moins à partir desdits modes et de leur valeur d'utilité respective, vérification de la validation d'au moins une première condition d'entrelacement desdits modes nécessaire et prédéterminée :
  - en cas d'invalidation de ladite au moins une première condition d'entrelacement, réitération dudit procédé à partir de l'étape de détermination de modes radar selon un jeu de contraintes modifié d'une itération à l'autre; ou
  - en cas de validation de ladite au moins une première condition d'entrelacement, tentative de détermination du séquençage d'entrelacement desdits modes :
    - en cas d'échec de ladite tentative de détermination dudit séquençage, réitération dudit procédé à partir de l'étape de vérification pour au moins une deuxième condition d'entrelacement desdits modes nécessaire et prédéterminée modifiée par rapport à ladite au moins une première condition d'entrelacement, et en parallèle réitération dudit procédé à partir de l'étape de détermination de modes radar selon un jeu de contraintes modifié d'une itération à l'autre ;
    - en cas de succès de ladite tentative de détermination dudit séquençage, obtention dudit séquençage.

Avantageusement, l'ordre des étapes successivement mises en oeuvre selon le procédé de l'invention procure une hiérarchie complète au système de décision de sorte à rendre son comportement explicable en renvoyant une définition de l'entrelacement obtenu dotée d'un sens opérationnel pour l'opérateur sans être nécessairement associée à la définition de pointage(s) radar.

En effet, selon la présente invention, une évaluation des modes radar est tout d'abord mise en oeuvre via la détermination d'une valeur d'utilité associée, et ce par secteur radar à couvrir afin d'optimiser spatialement chaque objectif de la mission de surveillance courante comprenant par exemple, un premier objectif de surveillance d'un tanker, un deuxième objectif de surveillance d'un jet-ski, etc.

Puis, le procédé selon la présente invention est propre à permettre rapidement à l'opérateur radar d'apprécier de la possibilité ou non d'entrelacer une séquence de modes radar préalablement déterminée selon un premier jeu de contraintes prédéterminé, tout en offrant une première possibilité de rétroaction optionnelle pour sélectionner d'autres modes radar à entrelacer ou en élaborer automatiquement de nouveaux en adaptant le jeu de contraintes premièrement utilisé.

Successivement, le procédé selon la présente invention est ensuite également propre à permettre rapidement à l'opérateur radar d'apprécier la possibilité de mettre en place un séquençage spatio-temporel de l'entrelacement, tout en offrant une deuxième possibilité de rétroaction si le séquençage est impossible afin de réitérer la sélection d'autres modes radar à entrelacer ou l'élaboration automatique de nouveaux modes en adaptant à nouveau le jeu de contraintes utilisé.

Un tel enchainement ordonné et hiérarchisé d'étapes, leurs interactions en cas d'invalidation et/ou d'échec via deux niveaux optionnels de rétroaction entrainant une nouvelle itération associée à une adaptation de jeu de contraintes caractérisent l'organisation spécifique du procédé mis en oeuvre selon la présente invention.

Le procédé de décision et d'évaluation d'entrelacement d'une pluralité de modes radar proposé selon la présente invention peut également présenter une ou plusieurs des caractéristiques ci-dessous, prises indépendamment ou selon toutes les combinaisons techniquement envisageables :

- le procédé comprend en outre, après détermination dudit séquençage une étape de calcul des ressources et temps radar restant disponibles après application dudit séquençage, et en fonction du résultat dudit calcul, réitération dudit procédé à partir de l'étape de détermination de modes radar ;
- le procédé comprend en outre une étape de détermination, par secteur radar à couvrir, d'un coût associé à chaque mode fourni par l'étape de détermination de modes radar, chaque coût étant également propre à être pris en compte lors de ladite étape de vérification de la validation d'au moins une condition d'entrelacement desdits modes nécessaire et prédéterminée ;

- le procédé comprend en outre une étape de priorisation de secteurs radars à utiliser, la priorisation étant déterminée au moins en fonction de ladite mission, la priorité de chaque secteur étant propre à être également prise en compte lors de ladite étape de vérification de la validation d'au moins une condition d'entrelacement desdits modes nécessaire et prédéterminée ;
- ladite étape de priorisation est mise en oeuvre en tenant compte également de données de navigation et/ou d'au moins un élément d'information externe audit au moins un radar, l'élément d'information externe appartenant au groupe comprenant au moins :
  - un élément d'information fourni par un système d'identification automatique,
  - un élément d'information météorologique,
  - un élément d'état de mer,
  - un élément d'information fourni par un système de liaison de données ;
- la détermination d'une valeur d'utilité, par secteur radar à couvrir, représentative de l'utilité pour chaque objectif de ladite mission associée à chacun desdits modes fournis par l'étape de détermination de modes radar repose sur un système à logique floue ;
- le système à logique floue est entrainable par apprentissage par renforcement ;
- au moins une caractéristique prédéterminée de chaque mode est utilisée comme entrée d'un arbre dudit système à logique floue, ladite au moins une caractéristique appartenant au groupe comprenant, pour chaque mode :
  - la probabilité de détection estimée,
  - la surface équivalente radar minimale détectable estimée en fonction de la distance, de l'élévation et du gisement associés à chaque secteur ;
  - une information représentative de l'utilisation effective ou de l'absence d'utilisation des lobes principaux à 3dB du maximum de la puissance émise dudit au moins un radar ;
  - les besoins de couverture de la mission ;
  - les facteurs de forme de chaque mode ;
  - un couple de distances minimale et maximale instrumentée ;
  - une empreinte de détection au sol associée audit mode en fonction de l'altitude dudit radar ;
  - une capacité de couverture associée audit mode, par type de cible dudit radar,
  - un temps d'observation par degré ;
  - une information représentative de la facilité dudit mode à être entrelacé, ladite information étant obtenue par comparaison de la durée de cycle dudit mode aux temps de revisite minimal et maximal associés ;
  - une capacité en élévation ;

  et/ou dans lequel au moins une information de fonctionnement de chacun desdits modes radar est utilisée comme entrée dudit arbre dudit système à logique floue, ladite au moins une information de fonctionnement appartenant au groupe comprenant :

  - une indication de la consommation des ressources de calcul et de mémoire de chacun desdits modes radar relativement aux capacités maximales dudit radar ;
  - une température de fonctionnement dudit radar ;
  - une indication de la consommation énergétique consécutive à l'emploi de chacun desdits modes radar ;
  - une indication de l'évolution du temps moyen avant défaillance consécutive à l'emploi de chacun desdits modes radar.

L'invention a également pour objet un programme d'ordinateur comportant des instructions logicielles qui, lorsqu'elles sont exécutées par un ordinateur, mettent en oeuvre un procédé de décision et d'évaluation d'entrelacement d'une pluralité de modes radar tel que défini ci-dessus.

Par la suite, la référence à un programme d'ordinateur qui, lorsqu'il est exécuté, effectue l'une quelconque des instructions logicielles précitées, ne se limite pas à un programme d'application s'exécutant sur un ordinateur hôte unique.

En d'autres termes, les termes programme d'ordinateur et logiciel sont utilisés par la suite dans un sens général pour faire référence à tout type de code informatique (par exemple, un logiciel d'application, un micro logiciel, un microcode, ou toute autre forme d'instruction d'ordinateur) qui peut être utilisé pour programmer un ou plusieurs processeurs et/ou calculateur(s) numérique(s) programmable(s) pour mettre en oeuvre le procédé de décision et d'évaluation d'entrelacement d'une pluralité de modes radar tel que défini ci-dessus.

L'invention concerne également un dispositif électronique de décision et d'évaluation d'entrelacement d'une pluralité de modes radar d'au moins un radar propre à être embarqué à bord d'un véhicule, notamment un aéronef, ou propre à être mis en oeuvre à bord d'un dispositif de simulation du comportement dudit véhicule
le dispositif électronique de décision et d'évaluation d'entrelacement de modes radar comprenant :

- un module d'obtention configuré pour obtenir une mission radar à effectuer, ladite mission comprenant au moins un objectif à remplir ;
- un premier module de détermination configuré pour déterminer, selon un premier jeu de contraintes prédéterminé, des modes radar propres à répondre à au moins un objectif de ladite mission radar ;
- un deuxième module de détermination configuré pour déterminer une valeur d'utilité, par secteur radar à couvrir, représentative de l'utilité pour chaque objectif de ladite mission associée à chacun desdits modes fournis par l'étape de détermination de modes radar ;
- un module de vérification configuré pour vérifier, au moins à partir desdits modes et de leur valeur d'utilité respective, la validation d'au moins une première condition d'entrelacement desdits modes nécessaire et prédéterminée ;
- un module de réitération configuré pour ordonner au premier module de détermination de réitérer la détermination de modes radar, selon un jeu de contraintes modifié d'une itération à l'autre, en cas d'invalidation de ladite au moins une première condition d'entrelacement ;
- un troisième module de détermination, configuré pour tenter de déterminer le séquençage d'entrelacement desdits modes en cas de validation de ladite au moins une première condition d'entrelacement, et pour :

    - en cas d'échec de ladite tentative de détermination dudit séquençage, ordonner au module de vérification de réitérer la vérification pour au moins une deuxième condition d'entrelacement desdits modes nécessaire et prédéterminée modifiée par rapport à ladite au moins une première condition d'entrelacement, et en parallèle pour ordonner au premier module de détermination de réitérer la détermination de modes radar selon un jeu de contraintes modifié d'une itération à l'autre ;
    - en cas de succès de ladite tentative de détermination dudit séquençage, obtenir dudit séquençage.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 représente schématiquement le procédé de décision et d'évaluation d'entrelacement d'une pluralité de modes radar selon un mode de réalisation de l'invention ;
[Fig 2] la figure 2 illustre un exemple d'arbre de décision utilisé pour la détermination d'une valeur d'utilité par secteur radar à couvrir, représentative de l'utilité pour chaque objectif de ladite mission associée à chacun des modes radar, un tel arbre étant entraînable par apprentissage par renforcement ;
[Fig 3] [Fig. 4] les figures 3 et 4 illustrent un exemple d'application du système à logique floue selon la présente invention ;
[Fig 5] la figure 5 illustre un exemple de résultat de l'étape de vérification selon la présente invention ;
[Fig 6] la figure 6 illustre un exemple de séquençage d'entrelacement propre à être obtenu selon la présente invention ;
[Fig 7] la figure 7 illustre un plus haut niveau d'application du système à logique floue selon la présente invention.

Dans la suite de la description, il est à noter que la présente invention s'appuie sur une représentation opérationnelle de l'espace de décision centré sur un radar du système actif de surveillance considéré, en considérant par exemple un repère distance-gisement-élévation centré sur ledit radar. Les différentes conventions classiques ou transformation de coordonnées classiques sont alors propres à être utilisées pour exprimer le problème de décision d'entrelacement de modes radar dans un tel repère distance-gisement-élévation centré sur un radar du système actif de surveillance considéré.
De plus, dans la suite de la description, il est à noter que les décisions d'entrelacement selon la présente invention sont étalées dans le temps et dans l'espace. En particulier, en ce qui concerne la dimension spatiale, l'espace est discrétisé en régions spatiales autour du radar au centre du repère précité correspondant à des secteurs, un secteur étant défini en trois dimensions par un « cône » distance-gisement-élévation, ou en deux dimensions par des distances et des gisements.
Il est à noter par ailleurs que selon la présente invention la gestion de la figure de balayage radar, gérable par secteur ou par groupe de secteurs en fonction des contraintes des capteurs, de même que les pointages radar associés sont délégués à un autre système non discuté par la suite.
Par ailleurs, il est à noter que dans le cas des radars aéroportés à multi-panneaux rayonnants, les temps des transitions entre les panneaux consomment aussi du temps radar, ce qui a une influence sur les possibilités d'entrelacement des modes, si bien que ces transitions doivent donc être considérées comme des ressources, qu'optionnellement l'opérateur est propre à imposer un schéma prédéfini de rafraîchissement des données.
Par « décision et évaluation d'entrelacement d'une pluralité de modes radar d'au moins un radar », on entend, selon la présente invention, la combinaison des étapes du procédé selon la présente invention comprenant notamment la vérification d'au moins une condition d'entrelacement jusqu'à validation et la tentative de détermination du séquençage jusqu'au succès.

La figure 1 représente schématiquement le procédé de décision et d'évaluation d'entrelacement d'une pluralité de modes radar selon un mode de réalisation de l'invention, un tel procédé visant à partager toutes les ressources radar, à savoir : le temps radar, la puissance de calcul et de traitement, les ressources d'alimentation électrique, de refroidissement, etc. de manière à répondre au mieux à la mission de surveillance à accomplir.

Plus précisément, tel qu'illustré par la figure 1, le procédé comprend selon la présente invention au moins les étapes successives et hiérarchisées suivantes :

- obtention 12 d'une mission radar à effectuer, ladite mission comprenant au moins un objectif à remplir ;
- détermination 14, selon un premier jeu de contraintes prédéterminé, de modes radar propres à répondre à au moins un objectif de ladite mission radar ;
- détermination 16 d'une valeur d'utilité, par secteur radar à couvrir, représentative de l'utilité pour chaque objectif de ladite mission associée à chacun desdits modes fournis par l'étape de détermination de modes radar ;
- au moins à partir desdits modes et de leur valeur d'utilité respective, vérification 18 de la validation d'au moins une première condition d'entrelacement desdits modes nécessaire et prédéterminée :
  - en cas d'invalidation de ladite au moins une première condition d'entrelacement, réitération dudit procédé, par un module de réitération non représenté du dispositif électronique de décision et d'évaluation d'entrelacement d'une pluralité de modes radar, à partir de l'étape de détermination 14 de modes radar selon un jeu de contraintes modifié d'une itération à l'autre; ou
  - en cas de validation de ladite au moins une première condition d'entrelacement, tentative de détermination 20 du séquençage d'entrelacement desdits modes :
    - en cas d'échec de ladite tentative de détermination 20 dudit séquençage, réitération dudit procédé à partir de l'étape de vérification 18 pour au moins une deuxième condition d'entrelacement desdits modes nécessaire et prédéterminée modifiée par rapport à ladite au moins une première condition d'entrelacement, et en parallèle réitération dudit procédé à partir de l'étape de détermination 14 de modes radar selon un jeu de contraintes modifié d'une itération à l'autre ;
    - en cas de succès de ladite tentative de détermination 20 dudit séquençage, obtention dudit séquençage.

Chacune de ces étapes 12, 14, 16, 18, 20 sont ci-après détaillées et mises en oeuvre par un dispositif électronique, non représenté, de décision et d'évaluation d'entrelacement d'une pluralité de modes radar selon la présente invention.

En particulier, l'étape 12 d'obtention d'une mission radar à effectuer, ladite mission comprenant au moins un objectif à remplir est mise en oeuvre par un module d'obtention du dispositif électronique, non représenté, de décision et d'évaluation d'entrelacement d'une pluralité de modes radar selon la présente invention, et ce en interface avec le système actif de surveillance à base de radar(s) et en utilisant toutes les fonctions usuelles du radar.

La mission obtenue contient la formulation du besoin mission (i.e. d'au moins un objectif de ladite mission) exprimé par l'opérateur ou un système de mission, de même que les entrées nécessaires aux étapes suivantes du procédé telles que par exemple l'altitude de l'aéronef voire du radar, les informations de navigation de l'aéronef à savoir son cap et son orientation angulaire, la température dudit au moins un radar système actif de surveillance et les informations de calibrage radar associées, des données externes issues de liaison de données ou autre telles que des informations de météo, etc.

En particulier, les objectifs de la mission formulés par l'opérateur ou le système de mission, sont propres à être répartis, d'un point de vue entrelacement, entre d'une part des objectifs incompatibles $12_A$ nécessitant l'entrelacement de plusieurs modes radar, et correspondent par exemple à différents types de cibles, telles que des cibles aériennes, des cibles de surface, des cibles lentes telles qu'un tanker, des cibles rapides telles qu'un jet-ski, des cibles fugitives/non fugitives, etc., et d'autre part des objectifs compatibles $12_B$ d'un même mode radar.

L'étape 14 de détermination, selon un premier jeu de contraintes prédéterminé, de modes radar propres à répondre à au moins un objectif de ladite mission radar, est mise en oeuvre par un premier module de détermination du dispositif électronique, non représenté, de décision et d'évaluation d'entrelacement d'une pluralité de modes radar selon la présente invention.

Pour ce faire, le premier module de détermination, non représenté, du dispositif électronique selon la présente invention comprend classiquement un outil de sélection de modes radar et/ou un outil de conception automatique de modes radar.

L'étape 16 de détermination d'une valeur d'utilité, par secteur radar à couvrir, représentative de l'utilité, pour chaque objectif de ladite mission, associée à chacun desdits modes fournis par l'étape 14 de détermination de modes radar est mise en oeuvre par un deuxième module de détermination du dispositif électronique, non représenté, de décision et d'évaluation d'entrelacement d'une pluralité de modes radar selon la présente invention.

Une telle étape 16 consiste à évaluer des utilités pour chaque mode radar, chaque objectif de mission et chaque secteur. Une telle évaluation prend donc en compte trois dimensions distinctes (i.e. mode radar, objectif de mission et secteur).

L'évaluation d'utilité de chaque mode consiste à interpréter automatiquement, au moyen d'un outil d'intelligence artificielle dudit deuxième module de détermination du dispositif électronique selon la présente invention, les caractéristiques de chaque mode et leur agrégation en vue de fournir une note d'utilité à chaque objectif de mission de chaque mode et pour chaque secteur.

Selon un aspect particulier optionnel, la détermination d'une valeur d'utilité, par secteur radar à couvrir, représentative de l'utilité pour chaque objectif de ladite mission associée à chacun desdits modes fournis par l'étape de détermination de modes radar repose sur un outil d'intelligence artificielle correspondant à un système à logique floue permettant d'introduire un caractère explicable du point de vue opérateur, tout en étant propre à s'adapter à de nombreuses représentations de la réalité de la mission pour l'apprentissage par renforcement.

Selon une variante particulière de cet aspect particulier optionnel un tel système à logique floue est entrainable par apprentissage par renforcement.

Autrement dit, selon cet aspect particulier, la détermination d'une valeur d'utilité (i.e. l'évaluation d'utilité de chaque mode, pour chaque objectif de mission, et ce en considérant la dimension spatiale par secteur) repose sur des arbres à logique floue propres à rendre l'évaluation des utilités explicables à l'opérateur.

Ainsi, la présente invention entend proposer une hiérarchisation du problème d'optimisation combinatoire d'entrelacement d'une pluralité de modes radar en s'appuyant pour partie sur « l'explicabilité » héritée de la logique floue introduite notamment par L. A. Zadeh, dans le document intitulé « *Outline of a new approach to the analysis of complex systems and decision processes* ».

Selon un point particulier de cet aspect optionnel, au moins une caractéristique prédéterminée de chaque mode est utilisée comme entrée d'un arbre entraînable par apprentissage par renforcement dudit système à logique floue, ladite au moins une caractéristique appartenant au groupe comprenant, pour chaque mode :

- la probabilité de détection estimée,
- la surface équivalente radar minimale détectable estimée en fonction de la distance, de l'élévation et du gisement associés à chaque secteur ;
- une information représentative de l'utilisation effective ou de l'absence d'utilisation des lobes principaux à 3dB du maximum de la puissance émise dudit au moins un radar ;
- les besoins de couverture de la mission ;
- les facteurs de forme de chaque mode, correspondant par définition au rapport entre le temps d'émission du radar et le temps d'écoute du radar;
- un couple de distances minimale et maximale instrumentée ;
- une empreinte de détection au sol associée audit mode en fonction de l'altitude dudit radar, notamment pour un mode air-sol, et le cas échéant également en fonction de la distance à l'horizon radar, etc. ;
- une capacité de couverture associée audit mode, par type de cible dudit radar, par exemple exprimée sous la forme d'une couverture angulaire dudit mode telle qu'une couverture en site de 0 à 20° ou encore une couverture représentant 80% de la radiale/surface couverte à une probabilité de détection donnée déclinée pour chaque type de cibles, types spécifiés en fonction de la mission par l'opérateur et/ou le système de mission tels que des cibles de type fugitives et cibles de type non-fugitives, et ce optionnellement pondéré par une priorité, tel que décrit ci-après, devenant également une entrée d'arbre à logique floue dans ce cas ;
- un temps d'observation par degré, notamment propre à permettre de définir la consommation du temps radar, par chaque mode, un tel temps dépendant du secteur considéré (i.e. temps radar alloué à chaque secteur) et des paramètres du mode dans le secteur considéré ;
- une information représentative de la facilité dudit mode à être entrelacé, ladite information étant obtenue par comparaison de la durée de cycle dudit mode aux temps de revisite minimal et maximal associés ;
- une capacité en élévation, notamment pour distinguer les modes air et sol ;

et/ou dans lequel au moins une information de fonctionnement de chacun desdits modes radar est utilisée comme entrée dudit arbre dudit système à logique floue, ladite au moins une information de fonctionnement appartenant au groupe comprenant :

- une indication de la consommation des ressources de calcul et de mémoire de chacun desdits modes radar relativement aux capacités maximales dudit radar ;

- une température de fonctionnement dudit radar ;
- une indication de la consommation énergétique consécutive à l'emploi de chacun desdits modes radar ;
- une indication de l'évolution du temps moyen avant défaillance consécutive à l'emploi de chacun desdits modes radar.

Ainsi, la logique floue est employée au sein d'un arbre d'évaluation permettant de caractériser l'utilité d'un mode de détection radar, par objectif de mission et par secteur, en tenant compte des diverses contraintes et opportunités obtenues à partir desdites entrées comme décrit plus en détail par la suite en relation avec ma figure 2.

Un tel élément correspondant à un arbre d'évaluation permettant de caractériser l'utilité d'un mode de détection radar est propre à être entraîné selon la présente invention au moyen d'un apprentissage par renforcement mis en oeuvre par un outil d'intelligence artificielle dudit deuxième module de détermination du dispositif électronique selon la présente invention.

Un tel apprentissage par renforcement est propre à s'appuyer sur la stratégie développée par N. Ernest et al. telle qu'introduite et prouvée dans le document intitulé : *« Genetic fuzzy based artificial intelligence for unmanned combat aerial véhiculé control in simulated air combat missions* » pour entraîner un contrôleur fondé sur la logique floue, ou à tout autre procédé d'entrainement d'apprentissage par renforcement classique imposant un formalisme action - état (de l'anglais *state*) - observation - récompense (de l'anglais *reward*) tout en étant compatible avec une structure d'agent modulaire permettant de passer d'un arbre à logique floue à un réseau de neurones ou encore à une technique modulaire d'exploration-exploitation.

L'outil d'intelligence artificielle dudit deuxième module de détermination du dispositif électronique selon la présente invention est, de par sa capacité de généralisation, configuré pour gérer les variations existantes entre les modes radars ayant servi à l'entraînement d'apprentissage par renforcement et les modes radars effectivement enclenchés durant une mission.

Il est à noter que par rapport à l'estimation de la performance d'un mode connue et classique pour un concepteur de mode radar, notamment en fonction de leurs performances, des conditions d'emploi, telles que l'altitude, le cap, l'état de la mer, les directions relatives de la houle et du vent à l'axe de visée du radar, etc., la détermination 16 de valeur d'utilité mise en oeuvre selon la présente invention incorpore un premier niveau d'intelligence artificiel puisqu'il est, selon un aspect particulier optionnel conçu de telle manière à pouvoir être entraîné par apprentissage par renforcement, et ce en introduisant un caractère explicable par l'emploi de la logique floue. Autrement dit, selon la présente invention, l'estimation de la performance d'un mode connue et classique est propre à être utilisée pour générer une à plusieurs entrées de l'étape de détermination 16.

L'étape 18 de vérification de la validation d'au moins une première condition d'entrelacement desdits modes nécessaire et prédéterminée correspond, en cas d'invalidation, à une gestion explicable des sacrifices, ou en cas de validation, correspond à la sélection de paire(s) (i.e. d'activité), chaque paire (i.e. activité) associant un mode et un secteur, candidates à l'entrelacement. Une telle étape 18 est mise en oeuvre par un module de vérification du dispositif électronique, non représenté, de décision et d'évaluation d'entrelacement d'une pluralité de modes radar selon la présente invention, et reçoit en entrée la valeur d'utilité respectivement associée à chaque mode, par secteur radar à couvrir, et pour chaque objectif de ladite mission, calculée lors de l'étape 16 précédemment décrite.

L'étape 20 de tentative de détermination du séquençage d'entrelacement consiste à tenter d'entrelacer les activités (i.e. paires) sélectionnées lors de l'étape 18 en déterminant un séquencement temporel pour l'exécution de chacune de ces activités en respectant leur durée, leur période de répétition etc. Autrement dit, au cours de l'étape 20 les fonctions de recherche d'un séquencement des activités sélectionnées sont mises en oeuvre par le troisième module de détermination du dispositif électronique, non représenté, de décision et d'évaluation d'entrelacement d'une pluralité de modes radar selon la présente invention.

Tel qu'illustré sur la figure 1, selon un aspect complémentaire et facultatif, le procédé selon la revendication 1 comprend en outre, après détermination dudit séquençage une étape 22 de calcul des ressources et temps radar restant disponibles après application dudit séquençage, et en fonction du résultat dudit calcul, déclenche la réitération du procédé selon la présente invention à partir de l'étape 14 de détermination de modes radar.

Autrement dit, au cours de cette étape 22 propre à être mise en oeuvre par un module de calcul de ressources non représenté du dispositif électronique de décision et d'évaluation d'entrelacement d'une pluralité de modes radar selon la présente invention, les calculs des ressources, notamment en termes d'énergie électrique, etc., et des temps radar non consommés sont effectués en préambule à une réallocation possible au niveau de la conception/sélection des modes.

En particulier, une telle étape 22 de calcul de ressources est propre à impliquer une réitération complète du procédé notamment lorsque la mission de surveillance courante présente une durée de plusieurs heures durant laquelle les objectifs de mission sont propres à évoluer notamment du fait d'une variation d'environnement d'application par exemple en termes de marée, de direction de la houle, de direction du vent, etc. Notamment, par rapport à la situation initiale du lancement de la mission courante, en présence d'une accalmie météorologique propre à permettre une détection plus aisée, un objectif de mission est modifié de sorte à requérir une augmentation de la portée de détection en réduisant le temps d'observation nécessaire à la détection.

Par ailleurs, telqu'également illustré sur la figure 1, selon un aspect complémentaire et facultatif, le procédé selon la revendication 1 comprend en outre, une étape de détermination 24, par secteur radar à couvrir, d'un coût associé à chaque mode fourni par l'étape de détermination de modes radar, chaque coût étant également propre à être pris en compte lors de ladite étape 18 de vérification de la validation d'au moins une condition d'entrelacement desdits modes nécessaire et prédéterminée.

Plus précisément, un tel calcul 24 de coût des modes, propre à être mise en oeuvre par un module de calcul de coût non représenté du dispositif électronique de décision et d'évaluation d'entrelacement d'une pluralité de modes radar selon la présente invention, traduit la consommation des ressources radar telles que le temps radar, l'énergie électrique, etc. lors de son enclenchement dans un secteur donné sous la forme d'un coût.

En outre, tel qu'également illustré sur la figure 1, selon un aspect complémentaire et facultatif, le procédé selon la revendication 1 comprend en outre une étape 26 de priorisation de secteurs radars à utiliser, la priorisation 26 étant déterminée au moins en fonction de ladite mission, la priorité de chaque secteur étant propre à être également prise en compte lors de ladite étape de vérification 18 de la validation d'au moins une condition d'entrelacement desdits modes nécessaire et prédéterminée.

Plus précisément, l'attribution 26 de la priorité des secteurs, propre à être mise en oeuvre par un module de priorisation non représenté du dispositif électronique de décision et d'évaluation d'entrelacement d'une pluralité de modes radar selon la présente invention, représente l'intérêt opérationnel de chaque secteur.

Selon un premier exemple de répartition, certains secteurs sont selon cette étape 26 opérationnellement prioritaires et se voient allouer dans un premier temps toutes les ressources disponibles.

Au contraire, si, selon un deuxième exemple, tous les secteurs ont le même niveau de priorité, alors ils se voient allouer des temps et des ressources identiques.

Selon un autre exemple, un secteur coïncidant avec une région géographique à portée répétée est potentiellement moins prioritaire qu'un secteur coïncidant avec une région que l'on ne pourra voir qu'une seule fois (i.e. en relation avec un modèle d'anticipation de la trajectoire de l'aéronef).

Selon un aspect particulier complémentaire et optionnel de ladite étape de priorisation 26, ladite étape de priorisation 26 est mise en oeuvre en tenant compte également d'un ensemble 28 de données de navigation et/ou d'au moins un élément d'information externe audit radar, l'élément d'information externe appartenant au groupe comprenant au moins :

- un élément d'information fourni par un système d'identification automatique AIS (de l'anglais *Automatic Identification System*),
- un élément d'information météorologique,
- un élément d'état de mer,
- un élément d'information fourni par un système de liaison de données, tel qu'une radio, un satellite, etc.

L'attribution de priorité mise en oeuvre au cours de l'étape 26 repose ainsi sur l'expression du besoin de la mission, tel qu'éclairer prioritairement devant l'aéronef par exemple, et/ou sur l'ensemble 28 de données de navigation et/ou d'entrées externes décrit ci-dessus. L'attribution des priorités 26 selon la présente invention est alors propre à incorporer des notions d'anticipation ou de compromis.

Par exemple : compte tenu du cap de l'aéronef, de la présence de nuage, et de la trajectoire prévue, un secteur n'est visible que pendant une certaine plage de temps, sa priorité est alors augmentée durant cet intervalle de temps.

Selon un aspect non représenté sur la figure 1, l'étape de priorisation 26 est propre à être fusionnée avec (i.e. intégrée au sein de) l'étape 16 de détermination d'une valeur d'utilité, par secteur radar à couvrir, représentative de l'utilité, pour chaque objectif de ladite mission, associée à chacun desdits modes fournis par l'étape 14 de détermination de modes radar, au lieu d'être mise en oeuvre en parallèle tel qu'illustré par la figure 1.

Ainsi, selon le mode de réalisation de la figure 1, l'étape 18 de vérification prend en entrées les valeurs d'utilités issues de l'étape 16, les priorités des secteurs issues de l'étape de priorisation 26, et les coûts issus de l'étape 24.

Et selon ce mode de réalisation de la figure 1, en cas de validation d'au moins une première condition d'entrelacement desdits modes nécessaire et prédéterminée, la sélection 18 d'un ensemble d'activités s'effectue sur la base de la maximisation de la somme des valeurs d'utilités par rapport aux coûts issus de l'étape 24 tout en satisfaisant ladite première condition nécessaire, mais potentiellement non suffisante, à l'entrelacement.

Selon un aspect non représenté, le dispositif électronique de décision et d'évaluation d'entrelacement d'une pluralité de modes radar comprend une unité de traitement d'informations formée par exemple d'une mémoire et d'un processeur associé à la mémoire.

Selon un exemple particulier, le module d'obtention, le premier module de détermination, le deuxième module de détermination, le module de vérification, le module de réitération, le troisième module de détermination, et optionnellement le module de calcul de ressources, le module de calcul de coût, le module de priorisation du dispositif électronique de décision et d'évaluation d'entrelacement d'une pluralité de modes radar sont réalisés chacun sous forme d'un logiciel, ou d'une brique logicielle, exécutables par le processeur du dispositif selon la présente invention. La mémoire du dispositif électronique de décision et d'évaluation d'entrelacement d'une pluralité de modes radar est alors apte à stocker un logiciel d'obtention, un premier logiciel de détermination, un deuxième logiciel de détermination, un logiciel de vérification, un logiciel de réitération, un troisième logiciel de détermination, et optionnellement un logiciel de calcul de ressources, un logiciel de calcul de coût, un logiciel de priorisation. Le processeur est alors apte à exécuter chacun de ces logiciels.

En variante non représentée, le module d'obtention, le premier module de détermination, le deuxième module de détermination, le module de vérification, le module de réitération, le troisième module de détermination, et optionnellement le module de calcul de ressources, le module de calcul de coût, le module de priorisation du dispositif électronique de décision et d'évaluation d'entrelacement d'une pluralité de modes radar, sont réalisés chacun sous forme d'un composant logique programmable, tel qu'un FPGA (de l'anglais *Field Programmable Gate Array*), ou encore sous forme d'un circuit intégré dédié, tel qu'un ASIC (de l'anglais *Application Spécifie Integrated Circuit*).

Lorsque le dispositif électronique de décision et d'évaluation d'entrelacement d'une pluralité de modes radar est réalisé sous forme d'un ou plusieurs logiciels, c'est-à-dire sous forme d'un programme d'ordinateur, il est en outre apte à être enregistré sur un support, non représenté, lisible par ordinateur. Le support lisible par ordinateur est par exemple un médium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non volatile (par exemple EPROM, EEPROM, FLASH, MVRAM), une carte magnétique ou une carte optique. Sur le support lisible est alors mémorisé un programme d'ordinateur comprenant des instructions logicielles.

Il est à noter que le procédé de décision et d'évaluation d'entrelacement d'une pluralité de modes radar au niveau d'un secteur, dépend du nombre et du type de modes à considérer.

Par la suite on décrit ci-après un exemple illustratif d'application du procédé selon l'invention illustré par la figure 1 basé sur l'utilisation de trois modes, sans perte de généralité pour un entrelacement à $N \geq 3$ modes, avec N entier.

La figure 2 illustre un exemple d'arbre de décision utilisé par un outil d'intelligence artificielle dudit deuxième module de détermination du dispositif électronique selon la présente invention, pour la détermination d'une valeur d'utilité par secteur radar à couvrir, représentative de l'utilité pour chaque objectif de ladite mission associée à chacun des modes radar, un tel arbre étant entraînable par apprentissage par renforcement

La structure d'un tel arbre de décision utilisé pour la détermination d'une valeur d'utilité, par mode, par secteur à couvrir et par objectif à remplir, dépend du nombre de modes candidats issus de l'étape 14 précédemment décrite. En particulier, l'utilisation de trois modes m1, m2, m3 est associée à huit possibilités d'entrelacement par secteur, à savoir : une impossibilité d'entrelacement, le mode m1 seul, le mode m2 seul, le mode m3 seul, l'entrelacement des modes m1 et m2, l'entrelacement des modes m1 et m3, l'entrelacement des modes m2 et m3, l'entrelacement des modes m1, m2 et m3.

Selon les besoins/contraintes opérationnels, une structure plus contraignante est propre à être utilisée, par exemple lorsque le mode m1 est en permanence requis ce qui réduit le nombre de possibilités d'entrelacement par secteur à cinq, à savoir toutes les possibilités associées à l'utilisation du mode m1 à savoir : une impossibilité d'entrelacement, le mode m1 seul, l'entrelacement des modes m1 et m2, l'entrelacement des modes m1 et m3, l'entrelacement des modes m1, m2 et m3.

Ainsi la structure de l'arbre d'évaluation de l'utilité de la figure 2 dépend du nombre de modes candidats et du nombre des types d'objectif de la mission afin de convenir au profil de mission en cours, en considérant notamment les types de cible à traiter et les familles de mode à entrelacer.

En particulier, sur l'exemple d'arbre de logique floue de la figure 2, sont représentées en premier lieu ses entrées 30 correspondant aux caractéristiques de chaque mode considéré à savoir tel qu'indiqué précédemment au moins une caractéristique appartenant au groupe comprenant, pour chaque mode :

- la probabilité de détection estimée,
- la surface équivalente radar minimale détectable estimée en fonction de la distance, de l'élévation et du gisement associés à chaque secteur ;
- une information représentative de l'utilisation effective ou de l'absence d'utilisation des lobes principaux à 3dB du maximum de la puissance émise dudit au moins un radar ;
- les besoins de couverture de la mission ;
- les facteurs de forme de chaque mode, correspondant par définition au rapport entre le temps d'émission du radar et le temps d'écoute du radar;
- un couple de distances minimale et maximale instrumentée ;
- une empreinte de détection au sol associée audit mode en fonction de l'altitude dudit radar, notamment pour un mode air-sol, et le cas échéant également en fonction de la distance à l'horizon radar, etc. ;

- une capacité de couverture associée audit mode, par type de cible dudit radar, par exemple exprimée sous la forme d'une couverture angulaire dudit mode telle qu'une couverture en site de 0 à 20° ou encore une couverture représentant 80% de la radiale/surface couverte à une probabilité de détection donnée déclinée pour chaque type de cibles, types spécifiés en fonction de la mission par l'opérateur et/ou le système de mission tels que des cibles de type fugitives et cibles de type non-fugitives, et ce optionnellement pondéré par une priorité, tel que décrit ci-après, devenant également une entrée d'arbre à logique floue dans ce cas ;
- un temps d'observation par degré, notamment propre à permettre de définir la consommation du temps radar, par chaque mode, un tel temps dépendant du secteur considéré (i.e. temps radar alloué à chaque secteur) et des paramètres du mode dans le secteur considéré ;
- une information représentative de la facilité dudit mode à être entrelacé, ladite information étant obtenue par comparaison de la durée de cycle dudit mode aux temps de revisite minimal et maximal associés ;
- une capacité en élévation, notamment pour distinguer les modes air et sol ;

et/ou dans lequel au moins une information de fonctionnement de chacun desdits modes radar est utilisée comme entrée dudit arbre dudit système à logique floue, ladite au moins une information de fonctionnement appartenant au groupe comprenant :

- une indication de la consommation des ressources de calcul et de mémoire de chacun desdits modes radar relativement aux capacités maximales dudit radar ;
- une température de fonctionnement dudit radar ;
- une indication de la consommation énergétique consécutive à l'emploi de chacun desdits modes radar ;
- une indication de l'évolution du temps moyen avant défaillance consécutive à l'emploi de chacun desdits modes radar.

De telles entrées sont également propres à définir plus généralement la capacité de détection du mode considéré en fonction de conditions externes ou d'environnement telles que l'état de mer, le vent, etc., les besoins en discrétisation sur le secteur, la position géométrique du porteur et/ou de la cible, les ressources radar, etc.

L'ensemble des éléments cités ci-dessus constituent les entrées 30 des arbres à logique floue qui permettent d'évaluer l'utilité des modes radar, la valeur d'utilité par mode, par secteur à couvrir, et par objectif à remplir correspondant à la sortie de l'exemple d'arbre à logique floue mis en oeuvre par l'outil d'intelligence artificielle dudit deuxième module de détermination du dispositif électronique selon la présente invention.

La prise en compte d'un tel ensemble de données 30 d'entrées diverses permet d'adapter la structure de l'arbre à logique floue selon les besoins, de sorte à jouer le rôle de contrôleur de l'entrelacement à effectuer, par attribution de valeur d'utilité, à chaque mode radars, pour chaque secteur et chaque objectif de la mission.

Une fois la structure figée au moyen des entrées 30 adaptées aux objectifs de la mission à effectuer, le paramétrage d'un tel contrôleur est selon la présente invention propre à être soumis à un entraînement automatique, notamment par apprentissage par renforcement, ou, à titre d'alternative, propre à être établi par le concepteur du système actif de surveillance à base de radar(s) embarqué à bord d'un véhicule tel qu'un aéronef.

L'arbre de décision, utilisé spécifiquement selon la présente invention pour la détermination d'une valeur d'utilité, présente plusieurs niveaux correspondant aux étapes classiques et connues d'un système à logique floue propre à mettre en oeuvre une fuzzification propre à transformer les entrées classiques 30 en valeur linguistique. Autrement dit, au cours de la fuzzification les entrées classiques 30 sont traduites en concepts linguistiques, ici appliqués à l'entrelacement de modes radar, ces concepts linguistiques étant représentés comme des ensembles flous comprenant des sous-ensembles flous définis chacun par une fonction d'appartenance (i.e. fonction de fuzzification).

En particulier, le premier niveau 32 de l'arbre de décision de la figure 2 correspond à la transformation des entrées 30 en ensembles flous. Autrement dit, un tel étage d'arbre à logique floue est un premier étage d'interprétation des entrées 30, propre à les interpréter par exemple pour former des ensembles flous associés au mode radar considéré, et ce par secteur de couverture spatiale, tels que l'ensemble flou d'opportunité géométrique 34, l'ensemble flou 36 globalement représentatif des ressources restantes en temps, mémoire, etc., la capacité de détection 38, et un ensemble flou 40 globalement représentatif de la consommation du mode considéré en temps, en mémoire etc.

Par opportunité géométrique, on entend le volume de couverture associé à chaque mode radar, et par exemple défini en termes d'angles, par rapport au volume utile. En particulier, une opportunité géométrique correspond au fait de détecter une cible aérienne avec un mode radar sol mais uniquement pour les cibles qui volent en dessous de l'aéronef.

Par exemple, pour définir un ensemble flou correspondant à la capacité de détection 38, la distance instrumentée et la probabilité de détection fournies au sein des entrées 30, sont prises en compte simultanément pour leur appliquer un ensemble de règles prédéterminées. Autrement dit, le premier niveau 32 de l'arbre de décision de la figure 2 est configuré pour transformer des entrées 30 en ensembles flous, et ce en appliquant des opérations floues selon un ensemble de règles prédéterminées.

[Tab 1] Le tableau 1 ci-dessous représente un exemple d'un tel ensemble de règles prédéterminées appliqué pour la formation de l'ensemble flou capacité de détection 38 :

| dist. inst.\ p. détection | nulle | faible | bonne | excellente |
|---|---|---|---|---|
| Trop petite | nulle | nulle | nulle | nulle |
| petite | nulle | nulle | bonne | excellente |
| grande | nulle | faible | excellente | excellente |

Chaque combinaison d'entrées 30 donne lieu à l'application d'une règle : par exemple telle qu'illustré par le tableau 1 ci-dessus, le sous-ensemble flou correspondant à une capacité de détection « faible » résulte de la combinaison d'une distance instrumentée « grande » avec une probabilité de détection « faible ».

Il est à noter que les notions floues (i.e. fonction d'appartenance) « grand », « petit », etc. sont de la sémantique, figées selon leur dénomination linguistique, et communicables à l'opérateur tout en restant « dimensionnantes » du point de vue système, en considérant notamment qu'un résultat global associé à une sémantique « grand » est propre à correspondre à une plage de valeurs très particulière qu'un concepteur humain n'aurait pas intuité de prime abord.

Autrement dit, un système entier de logique floue vise à maximiser ou atteindre une valeur satisfaisante pour une ou plusieurs grandeurs, et le paramétrage du système induisant cette valeur satisfaisante n'est pas connu à l'avance (i.e. pas de solution triviale à l'inversion du problème et pas de solution analytique non plus, d'où la nécessité de la phase d'apprentissage). Néanmoins, la logique floue avec les fonctions d'appartenance introduit une sémantique explicable (de la relation entrée-sortie du système - entrées-sorties globales et intermédiaires à chaque étage de l'arbre). Par exemple, la capacité de détection 38 sera qualifiée de « bonne » selon une fonction d'appartenance, mais il convient au préalable d'apprendre son paramétrage.

Le deuxième niveau 42 de l'arbre de décision de la figure 2, utilise les sorties du premier niveau d'interprétation 32 pour établir un jugement de valeur (i.e. utilité sémantique : par exemple « utile », « pas utile », « très utile »), en évaluant notamment pour chaque cible (i.e. objectif) l'utilité du mode considéré. Sur la figure 2, trois utilités sémantiques 44, 46 et 48 sont déterminées au sein de ce deuxième niveau 42 respectivement pour trois types de cibles distincts de la mission courante : type 1, type 2 et type 3, et ce à partir de deux entrées correspondant notamment à une opportunité géométrique 34 et à une capacité de détection 38 pour chacune des trois utilités sémantiques 44, 46 et 48.

Par exemple, l'utilité sémantique 44 rassemble (i.e. agrège) les évaluations d'un mode radar pour un type de cible à partir de deux entrées correspondant notamment à une opportunité géométrique 34 et à une capacité de détection 38, ces entrées étant elles-mêmes des sous-arbres à logique floue, dont la profondeur est paramétrée lors de leur conception en fonction de la pertinence de l'emploi du mode radar considéré dans le secteur considéré et pour un type de cible donné. Selon un premier exemple, un telle pertinence dépend de la conception même du mode radar considéré. Selon un deuxième exemple, un telle pertinence dépend de la performance estimée vis-à-vis de l'environnement.

De plus, au sein de ce deuxième niveau 42, une variable floue 50 représente globalement la gestion de ressources associée à l'utilisation du mode considéré et reçoit en entrée les notions floues 36 et 40 respectivement globalement représentatives d'une part des ressources restantes en temps, mémoire, etc., et d'autre part de la consommation du mode considéré en temps, en mémoire etc.

La mise en oeuvre de la logique floue associée à chaque mode radar selon la présente invention met ensuite en oeuvre une étape d'agrégation dont le résultat 52 correspond à la variable floue linguistique correspondant à l'utilité du mode considéré sur un secteur donné obtenue en agrégeant les trois utilités sémantiques 44, 46 et 48 déterminées respectivement pour trois types de cibles distincts : type 1, type 2 et type 3, et la variable floue 50 représentant globalement la gestion de ressources associée à l'utilisation du mode considéré.

Autrement dit, pour caractériser l'utilité d'un mode sur un secteur, l'agrégation des différentes sorties 44, 46, 48 des sous-arbres de la figure 2 est mise en oeuvre automatiquement par le dispositif électronique selon la présente invention qui cherche alors à mimer automatiquement le processus de réflexion humaine consistant à se demander si le mode peut contribuer à détecter chacune des cibles d'intérêt, si le temps radar le permet, si les ressources calculatoires sont suffisantes etc.

Chaque mode est ainsi noté selon la capacité de détection (et/ou une autre fonction opérationnelle) qu'il assure pour chaque cible et le temps qu'il consomme versus les ressources 50 qu'il restitue ou ne consomme pas (coût).

Enfin, de manière classique non représentée, la mise en oeuvre de la logique floue associée à chaque mode radar selon la présente invention met ensuite en oeuvre une étape de défuzzification propre à transformer la variable floue linguistique 52 correspondant à l'utilité du mode considéré sur un secteur donné en données numériques.

Les figures 3 et 4 illustrent un exemple d'application du système à logique floue selon la présente invention. En particulier, la figure 3 illustre la combinaison d'une probabilité de détection selon l'interprétation « faible », représentée dans le cadre 54, avec d'une distance instrumentée selon l'interprétation « grande », représentée dans le cadre 56, produisant selon les règles du tableau 1 un sous-ensemble flou correspondant à une capacité de détection « faible » représentée dans le cadre 58 par la courbe 60 représentative de la fonction d'appartenance (i.e. fonction de fuzzification) définissant une capacité de détection selon l'interprétation « faible ».

Plus précisément, la sémantique « faible », « grande » etc. est un choix de conception, imposant une relation entre les paramètres des fonctions d'appartenance (i.e. « faible » inférieure à « grande ») et proposant une explication native du système à logique floue fondé sur des degrés de vérité. Par exemple, l'utilité d'un mode radar est « grande » avec un degré de vérité 0,8 lorsque la probabilité de détection est « grande » avec un degré de vérité 0,7 et lorsque la distance instrumentée est « très grande » avec un degré de vérité 0,9. Une telle explication, compte tenu de la structure du système à logique floue, est propre à être générée automatiquement.

Plus précisément, selon cet exemple on considère que, tel que représenté dans le cadre 54, la probabilité de détection, fournie dans l'ensemble d'entrée 30, associée au mode radar considéré présente une valeur de 51% en abscisse ce qui, selon la courbe de 62 représentative de la fonction d'appartenance (i.e. fonction de fuzzification) définissant une probabilité de détection « faible » est associée selon la ligne 64 à un degré de vérité selon la sémantique faible de valeur sensiblement égale à 0,62.

De même, tel que représenté dans le cadre 56, la distance instrumentée, fournie dans l'ensemble d'entrée 30, associée au mode radar considéré présente une valeur F de 86 en abscisse ce qui, selon la courbe de fuzzification 66 définissant une distance instrumentée « grande » est associée selon la ligne 68 à un degré de vérité de valeur sensiblement égale à 0,78.

Ces deux degrés de liberté de valeurs sensiblement égales à 0,62 et à 0,78 sont ensuite combinés par l'application de l'opérateur « & » en logique floue, ici homogène à prendre le minimum 0,62 des deux valeurs pour les deux propositions (entrées fuzzifées) « la probabilité de détection est faible » et « la distance instrumentée est grande »), si bien que la courbe 60 de capacité de détection associée à une telle combinaison est tronquée à la valeur 0,62 tel qu'illustré dans le cadre 58.

Il est à noter que les éléments de détails donnés ici relèvent d'une application particulière de logique floue, utile à la compréhension, mais sans perte de généralité dans la description de l'invention pour d'autres choix au niveau des opérateurs, des types et des paramétrages des fonctions d'appartenance (i.e. des fonctions de logique floue) ou tout autre paramètre propre à être adapté par apprentissage par renforcement selon la présente invention.

Les ensembles d'entrée de l'étape d'agrégation étant flous et correspondant notamment à des fonctions d'appartenance « tronquées » (i.e. associées à un degré de vérité maximal), toutes les règles d'agrégation sont classiquement plus ou moins appliquées, tel que représenté sur la partie A de la figure 4 avec en superposition les fonctions d'appartenance 70, 72 (correspondant à la courbe 60 de la figure 3), 74, 76 définissant respectivement une capacité de détection « nulle », une capacité de détection « faible », une capacité de détection « bonne » et un capacité de détection « excellente » ce qui revient à superposer l'ensemble des règles du tableau 1.

L'agrégation permettant d'obtenir le résultat 52 de la figure 2 consiste alors à combiner ses entrées 44, 46, 48 et 50 illustrées par la figure 2 et correspondant respectivement aux troncatures 80, 82, 84, 86, 88 obtenue de manière similaires à la troncature de la courbe 60 de la figure 3, en retenant par exemple la valeur maximale lorsque deux valeurs de troncature sont associées à une même abscisse, de sorte à obtenir sur la partie B la courbe résultante 90 après défuzzification 92 permettant propre à transformer la variable floue linguistique 52 correspondant à l'utilité du mode considéré sur un secteur donné en données numériques illustrées sur la partie B de la figure 4.

Il est à noter que d'autres possibilités classiquement utilisées en logique floue sont propre à être utilisées à titre d'alternative à la place du filtrage de la valeur maximale proposée selon l'exemple ci-dessus.

Selon l'exemple de la figure 4, la défuzzification 92 correspond par exemple à un centroïde (i.e. le centre de l'aire sous la courbe bleue) pour laquelle la valeur extraite est donnée par le damier jaune et noir, à savoir une capacité de détection un peu au-dessus de 50%.

Il est à noter que pour cet exemple, les règles indiquées au sein du tableau 1 sont arbitraires au même titre que leur nombre, le type ou encore le paramétrage des fonctions d'appartenance (fonctions triangulaires), ce qui permet de maintenir un certain caractère explicable du système, notamment en optant pour un système de règles arbitraires, avec un type de fonction d'appartenance défini à l'avance, les paramétrages des fonctions d'appartenance étant laissés à l'apprentissage automatique par renforcement tel que décrit précédemment.

En effet, la présente invention ne porte pas sur une famille de lois dont il convient de « trouver » les paramètres, mais sur une hiérarchie de relations entrées-sorties correspondant au système à logique floue mis en oeuvre selon la présente invention, pour lesquelles on impose une sémantique (un nombre de fonctions d'appartenance, et leur hiérarchie, par exemple petit étant inférieur à grand, etc.). L'apprentissage par renforcement permet d'apprendre un paramétrage de ces fonctions.

Pour un système à logique floue correctement conçu, une relation entrée-sortie du système complet existe du fait de la propriété « d'approximateur » universel des arbres à logique floue si bien que si l'on a assez de fonctions d'appartenance et accès à toutes les règles et combinaisons d'entrées, un tel système à logique floue est alors configuré pour approximer « n'importe » quelle association entrée-sortie ce qui présente une propriété analogue à celle d'un réseau de neurones, c'est pourquoi le système à logique floue, est selon un autre mode de réalisation propre à être remplacé par un tel réseau de neurones, un tel remplacement permettant potentiellement d'accélérer la convergence, mais ce, au détriment de la perte de l'explication sémantique fournie avantageusement par le système à logique floue proposé et précédemment décrit.

Ainsi, dans un contexte général, la présente invention est également propre à remplacer le système à logique floue complet décrit précédemment à titre d'exemple par n'importe quel système de correspondance entrées-sorties tel qu'un réseau de neurones, etc.

La décision finale d'inclure le mode à la solution d'entrelacement est fondée sur la note d'utilité individuelle 52 de chaque mode par rapport à son coût d'emploi, tel qu'explicité précédemment.

Les sorties 52 des arbres à logique floue sont des valeurs d'utilités et le dispositif décisionnaire d'entrelacement alimente donc, le module de vérification non représenté propre à mettre en oeuvre l'étape de vérification 18 telle qu'illustrée par la figure 1 la valeur d'utilité issue de l'étape 16, et optionnellement par le coût issu de l'étape optionnelle 24 ou encore la priorité d'un secteur issu de l'étape optionnelle 26, de chaque mode pour chaque secteur.

Un couple mode-secteur ($M_i$,$S_j$) définit une « activité » candidate à l'entrelacement.

Ladite au moins une première condition nécessaire à l'entrelacement à vérifier au cours de l'étape de vérification 18 correspond par exemple à celle indiquée au sein du brevet EP 1 314 999 B1 à savoir :

$$\sum_{i=1}^{Nb_{act}} \frac{D_i}{T_{rafMax,i}} < 1,$$

où $Nb_{act}$ est le nombre d'activités, $D_i$ est la durée de l'activité i et $T_{rafMax,i}$ est la période de rafraîchissement maximale tolérée pour l'activité i.

Diverses conditions nécessaires à l'entrelacement supplémentaires sont propres à être également prises en compte lors de l'étape de vérification 18 comme une période de rafraîchissement minimale (i.e. absence de revisite avant un certain temps) etc.

La décision de sacrifier une activité peut être fondée sur le ratio « utilité/coût » ou mettre en oeuvre une logique (voire un agent intelligent) plus élaboré.

Pour un temps d'exécution satisfaisant, il est par exemple opté pour un simple système d'enchères fondé sur le ratio « utilité/coût ».

A l'issue de l'étape de vérification 18, on obtient une sélection d'activité (i.e. couple mode-secteur) propre à être a priori entrelacées car vérifiant au moins une condition d'entrelacement prédéterminée (dès la première itération ou au bout de plusieurs itérations en modifiant le jeu de contraintes d'une itération à une autre) dont un exemple est illustré par la figure 5, le chiffre 1 valant sélection et le chiffre 0 valant rejet de l'activité considérée.

La figure 6 illustre un exemple de séquençage d'entrelacement propre à être obtenu en cas de succès de l'étape 20 de tentative de détermination d'un séquençage selon la présente invention.

Un tel séquençage est par exemple obtenu en utilisant un ordonnanceur classique, tel qu'un ordonnanceur utilisant l'algorithme d'ordonnancement préemptif à priorité dynamique : « *Earliest Deadline First* ».

Sur la figure 6 chaque numéro d'activité correspond à un couple sélectionné mode-secteur ($M_i$,$S_j$).

Selon la présente invention, il est possible que la tentative 20 de détermination du séquençage échoue notamment pour des raisons de périodicité.

Dans ce cas, la présente invention prévoit des rétroactions en cascade par réitération du procédé à partir de l'étape de vérification 18 et en parallèle à partir de l'étape de détermination 14 précitées, l'étape de vérification 18 étant réitérée pour au moins une deuxième condition d'entrelacement desdits modes nécessaire et prédéterminée modifiée par rapport à ladite au moins une première condition d'entrelacement, ladite au moins une deuxième condition d'entrelacement étant par exemple alors formulée sous la forme suivante : $\sum_{i=1}^{Nb_{act}} \frac{D_i}{T_{rafMax,i}} < 1 - marge$ afin d'obtenir au plus vite un entrelacement, de nouveaux modes à entrelacer étant déterminés au cours de l'étape parallèle 14 en étant par exemple sélectionnés/élaborés en fonction d'une portée / d'une sensibilité moindre.

Selon un aspect optionnel, chaque rétroaction/réitération mise en oeuvre est propre à être notifiée si besoin à l'opérateur.

La figure 7 illustre un plus haut niveau d'application du système à logique floue selon la présente invention. Plus précisément, la figure 7 vise à illustrer notamment que l'outil d'intelligence artificielle AI, correspondant à un système à logique floue dont un arbre de décision a été illustré et décrit précédemment en relation avec la figure 2, est mis en oeuvre pour la décision d'entrelacement D_E de chaque secteur radar à couvrir afin d'optimiser spatialement chaque objectif de la mission de surveillance courante, au moyen du dispositif 94 électronique de décision et d'évaluation d'entrelacement d'une pluralité de modes radar selon l'invention, à partir des entrées $30_1$ ; $30_2$, $30_3$, $30_4$, $30_5$ et $30_6$ correspondant aux caractéristiques de chaque mode.

Il est à noter que les variantes de réalisation décrites précédemment en relation avec le procédé de décision et d'évaluation d'entrelacement d'une pluralité de modes radar précédemment décrit s'applique de manière similaire au dispositif électronique selon la présente invention.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention propose ainsi une solution de décision d'entrelacement propre à répondre à la problématique de la surveillance maritime aéroportée, en introduisant notamment la notion de secteur, et présente un caractère opérationnel compréhensible et réglable par un utilisateur quitte à réduire les possibilités offertes par de l'entrelacement classiquement finement conçu au niveau des pointages de l'antenne et de la figure de balayage du ou des radars du système de surveillance utilisé.

Selon la présente invention, la notion de secteur est avantageusement complétée par l'emploi d'une structure hiérarchique et spécifique du procédé de décision, basée en premier lieu sur l'évaluation de chaque mode candidat selon l'opportunité de son emploi et de ses contraintes.

Selon un aspect particulier de la présente invention, cette caractérisation est fondée sur la logique floue, dont le paramétrage est notamment assuré via un apprentissage par renforcement. Un tel aspect est propre à introduire de l'intelligence artificielle dans le procédé de décision d'entrelacement, pour être capable de gérer une certaine profondeur spatiale et temporelle afin de caractériser l'utilité d'un mode dans un secteur donné.

En effet, lorsque le radar est aéroporté, la navigation de l'aéronef est propre à influencer la décision, et le recours selon la présente invention à la logique floue permet de fournir une traduction linguistique immédiate de l'utilité d'un mode à destination d'un utilisateur, notamment un opérateur radar.

Comme indiqué précédemment, la finalisation de la décision d'entrelacement selon la présente invention comprend deux niveaux, le premier permettant de sélectionner rapidement et de manière a priori, selon au moins une condition prédéfinie, les activités (i.e. couple mode-secteur) à entrelacer, le second portant sur la tentative de séquençage, notamment par un ordonnanceur classique, et en cas d'échec de la tentative de séquençage propre à propager des rétroactions : l'une pour améliorer globalement la solution ; l'autre pour garantir de trouver rapidement un entrelacement à enclencher.

Ainsi, la solution selon la présente invention propose une hiérarchie adaptée et spécifique au problème de surveillance maritime, une séparation particulière des étapes du procédé jusqu'à ordonnancement de l'entrelacement, tout en proposant un caractère explicable du point de vue de l'opérateur en utilisant notamment une formulation de la fonction d'évaluation de chaque mode fondée sur un système à logique floue paramétrable ou entraînable notamment par apprentissage par renforcement.

## Revendications

1. Procédé de décision et d'évaluation d'entrelacement d'une pluralité de modes radar d'au moins un radar propre à être embarqué à bord d'un véhicule, notamment un aéronef, ou propre à être mis en oeuvre à bord d'un dispositif de simulation du comportement dudit véhicule, ledit procédé étant mis en oeuvre par un dispositif électronique de décision et d'évaluation d'entrelacement de modes radar, le procédé comprenant les étapes successives suivantes :

    - obtention (12) d'une mission radar à effectuer, ladite mission comprenant au moins un objectif à remplir ;
    - détermination (14), selon un premier jeu de contraintes prédéterminé, de modes radar propres à répondre à au moins un objectif de ladite mission radar ;

    le procédé étant **caractérisé en ce qu'**il comprend en outre les étapes successives et hiérarchisées suivantes :

    - détermination (16) d'une valeur d'utilité, par secteur radar à couvrir, représentative de l'utilité pour chaque objectif de ladite mission associée à chacun desdits modes fournis par l'étape de détermination de modes radar ;
    - au moins à partir desdits modes et de leur valeur d'utilité respective, vérification (18) de la validation d'au moins une première condition d'entrelacement desdits modes nécessaire et prédéterminée :

        - en cas d'invalidation de ladite au moins une première condition d'entrelacement, réitération dudit procédé à partir de l'étape de détermination de modes radar selon un jeu de contraintes modifié d'une itération à l'autre; ou

- en cas de validation de ladite au moins une première condition d'entrelacement, tentative de détermination (20) du séquençage d'entrelacement desdits modes :

- en cas d'échec de ladite tentative de détermination dudit séquençage, réitération dudit procédé à partir de l'étape de vérification pour au moins une deuxième condition d'entrelacement desdits modes nécessaire et prédéterminée modifiée par rapport à ladite au moins une première condition d'entrelacement, et en parallèle réitération dudit procédé à partir de l'étape de détermination de modes radar selon un jeu de contraintes modifié d'une itération à l'autre ;
- en cas de succès de ladite tentative de détermination dudit séquençage, obtention dudit séquençage.

**2.** Procédé selon la revendication 1 comprenant en outre, après détermination dudit séquençage une étape (22) de calcul des ressources et temps radar restant disponibles après application dudit séquençage, et en fonction du résultat dudit calcul, réitération dudit procédé à partir de l'étape de détermination de modes radar.

**3.** Procédé selon la revendication 1 ou 2, comprenant en outre une étape (24) de détermination, par secteur radar à couvrir, d'un coût associé à chaque mode fourni par l'étape de détermination de modes radar, chaque coût étant également propre à être pris en compte lors de ladite étape de vérification de la validation d'au moins une condition d'entrelacement desdits modes nécessaire et prédéterminée.

**4.** Procédé selon l'une quelconque des revendications précédentes, comprenant en outre une étape (26) de priorisation de secteurs radars à utiliser, la priorisation étant déterminée au moins en fonction de ladite mission, la priorité de chaque secteur étant propre à être également prise en compte lors de ladite étape de vérification de la validation d'au moins une condition d'entrelacement desdits modes nécessaire et prédéterminée.

**5.** Procédé selon la revendication 4, dans lequel ladite étape de priorisation (26) est mise en oeuvre en tenant compte également de données de navigation et/ou d'au moins un élément d'information externe audit au moins un radar, l'élément d'information externe appartenant au groupe comprenant au moins :

- un élément d'information fourni par un système d'identification automatique,
- un élément d'information météorologique,
- un élément d'état de mer,
- un élément d'information fourni par un système de liaison de données.

**6.** Procédé selon l'une quelconque des revendications précédentes dans lequel la détermination d'une valeur d'utilité, par secteur radar à couvrir, représentative de l'utilité pour chaque objectif de ladite mission associée à chacun desdits modes fournis par l'étape de détermination de modes radar repose sur un système à logique floue.

**7.** Procédé selon la revendication 6 dans lequel le système à logique floue est entrainable par apprentissage par renforcement.

**8.** Procédé selon la revendication 6 ou 7, dans lequel au moins une caractéristique prédéterminée de chaque mode est utilisée comme entrée d'un arbre dudit système à logique floue, ladite au moins une caractéristique appartenant au groupe comprenant, pour chaque mode :

- la probabilité de détection estimée,
- la surface équivalente radar minimale détectable estimée en fonction de la distance, de l'élévation et du gisement associés à chaque secteur ;
- une information représentative de l'utilisation effective ou de l'absence d'utilisation des lobes principaux à 3dB du maximum de la puissance émise dudit au moins un radar ;
- les besoins de couverture de la mission ;
- les facteurs de forme de chaque mode ;
- un couple de distances minimale et maximale instrumentée ;
- une empreinte de détection au sol associée audit mode en fonction de l'altitude dudit radar ;
- une capacité de couverture associée audit mode, par type de cible dudit radar,
- un temps d'observation par degré ;
- une information représentative de la facilité dudit mode à être entrelacé, ladite information étant obtenue par comparaison de la durée de cycle dudit mode aux temps de revisite minimal et maximal associés ;
- une capacité en élévation ;

et/ou dans lequel au moins une information de fonctionnement de chacun desdits modes radar est utilisée comme entrée dudit arbre dudit système à logique floue, ladite au moins une information de fonctionnement appartenant au groupe comprenant :

- une indication de la consommation des ressources de calcul et de mémoire de chacun desdits modes radar relativement aux capacités maximales dudit radar ;
- une température de fonctionnement dudit radar ;
- une indication de la consommation énergétique consécutive à l'emploi de chacun desdits modes radar ;
- une indication de l'évolution du temps moyen avant défaillance consécutive à l'emploi de chacun desdits modes radar.

**9.** Programme d'ordinateur comportant des instructions logicielles qui, lorsqu'elles sont exécutées par un ordinateur, mettent en oeuvre le procédé de décision et d'évaluation d'entrelacement d'une pluralité de modes radar d'au moins un radar selon l'une quelconque des revendications précédentes.

**10.** Dispositif électronique de décision et d'évaluation d'entrelacement d'une pluralité de modes radar d'au moins un radar propre à être embarqué à bord d'un véhicule, notamment un aéronef, ou propre à être mis en oeuvre à bord d'un dispositif de simulation du comportement dudit véhicule, **caractérisé en ce que** le dispositif électronique de décision et d'évaluation d'entrelacement de modes radar comprend :

- un module d'obtention configuré pour obtenir une mission radar à effectuer, ladite mission comprenant au moins un objectif à remplir ;
- un premier module de détermination configuré pour déterminer, selon un premier jeu de contraintes prédéterminé, des modes radar propres à répondre à au moins un objectif de ladite mission radar ;
- un deuxième module de détermination configuré pour déterminer une valeur d'utilité, par secteur radar à couvrir, représentative de l'utilité pour chaque objectif de ladite mission associée à chacun desdits modes fournis par l'étape de détermination de modes radar ;
- un module de vérification configuré pour vérifier, au moins à partir desdits modes et de leur valeur d'utilité respective, la validation d'au moins une première condition d'entrelacement desdits modes nécessaire et prédéterminée ;
- un module de réitération configuré pour ordonner au premier module de détermination de réitérer la détermination de modes radar, selon un jeu de contraintes modifié d'une itération à l'autre, en cas d'invalidation de ladite au moins une première condition d'entrelacement ;
- un troisième module de détermination, configuré pour tenter de déterminer le séquençage d'entrelacement desdits modes en cas de validation de ladite au moins une première condition d'entrelacement, et pour :

  - en cas d'échec de ladite tentative de détermination dudit séquençage, ordonner au module de vérification de réitérer la vérification pour au moins une deuxième condition d'entrelacement desdits modes nécessaire et prédéterminée modifiée par rapport à ladite au moins une première condition d'entrelacement, et en parallèle pour ordonner au premier module de détermination de réitérer la détermination de modes radar selon un jeu de contraintes modifié d'une itération à l'autre ;
  - en cas de succès de ladite tentative de détermination dudit séquençage, obtenir dudit séquençage.

## Patentansprüche

**1.** Verfahren zur Entscheidung und Bewertung des Interlacing einer Vielzahl von Radarmodi von mindestens einem Radar, das geeignet ist, an Bord eines Fahrzeugs, insbesondere eines Luftfahrzeugs, mitgeführt zu werden, oder geeignet ist, an Bord einer Vorrichtung zur Simulation des Verhaltens des genannten Fahrzeugs implementiert zu werden, wobei das genannte Verfahren von einer elektronischen Vorrichtung zur Entscheidung und Bewertung des Interlacing von Radarmodi durchgeführt wird, wobei das Verfahren die folgenden aufeinanderfolgenden Schritte umfasst:

- Erhalten (12) einer auszuführenden Radarmission, wobei die Mission mindestens ein zu erfüllendes Ziel umfasst;
- Bestimmen (14), gemäß einem ersten Satz von vorbestimmten Einschränkungen, von Radarmodi, die geeignet sind, mindestens ein Ziel der genannten Radarmission zu erfüllen;

wobei das Verfahren **dadurch gekennzeichnet ist, dass** es unter anderem die aufeinander folgenden und hierarchisierten Schritte umfasst:

- Bestimmen (16) eines Nutzwerts, pro abzudeckendem Radarsektor, der repräsentativ für den Nutzen für jedes Ziel der Mission ist, das mit jedem der Modi verbunden ist, die durch den Schritt des Bestimmens von Radarmodi bereitgestellt werden;
- zumindest aus den Modi und ihrem jeweiligen Nutzwert, Verifizierung (18) der Validierung von mindestens einer ersten Bedingung für das Interlacing der Modi, die notwendig und vorbestimmt ist:
    - im Falle der Ungültigkeit der mindestens einen ersten Interlacing-Bedingung, Wiederholung des Verfahrens ab dem Schritt der Bestimmung von Radarmodi gemäß einem von Iteration zu Iteration geänderten Satz von Einschränkungen; oder
    - bei Bestätigung der mindestens einen ersten Interlacing-Bedingung Versuch der Bestimmung (20) der Interlacing-Reihenfolge der Modi:
        - im Falle eines Fehlschlags des Versuchs, die Sequenz zu bestimmen, Wiederholung des Verfahrens ab dem Verifizierungsschritt für mindestens eine zweite Interlacing-Bedingung der Modi, die notwendig und vorbestimmt sind und bezüglich der mindestens einen ersten Interlacing-Bedingung geändert sind und parallel dazu Wiederholung des Verfahrens ab dem Schritt der Bestimmung von Radarmodi gemäß einem Satz von Beschränkungen, der von Iteration zu Iteration geändert wird;
        - bei Erfolg des Versuchs, die Sequenzierung zu bestimmen, Erhalt der Sequenzierung.

**2.** Verfahren nach Anspruch 1, das außerdem nach der Bestimmung der Sequenzierung einen Schritt (22) zur Berechnung der nach der Bestimmung der Sequenzierung noch verfügbaren Radarressourcen und -zeit umfasst, und in Abhängigkeit vom Ergebnis der Berechnung, das Verfahren ab dem Schritt der Bestimmung der Radarmoden erneut durchführt.

**3.** Verfahren nach Anspruch 1 oder 2, ferner mit einem Schritt (24) zur Bestimmung, pro abzudeckendem Radarsektor, eines Kostenfaktors, der mit jedem Modus verbunden ist, der durch den Schritt zur Bestimmung von Radarmodi bereitgestellt wird, wobei jeder Kostenpunkt auch geeignet ist, bei dem Schritt der Verifizierung der Validierung von mindestens einer notwendigen und vorbestimmten Bedingung für das Interlacing der Modi berücksichtigt zu werden.

**4.** Verfahren nach einem der vorhergehenden Ansprüche, das außerdem einen Schritt (26) zur Priorisierung von zu verwendenden Radarsektoren umfasst, wobei die Priorisierung zumindest in Abhängigkeit von der genannten Mission bestimmt wird, wobei die Priorität jedes Sektors dazu geeignet ist, auch bei dem Schritt der Verifizierung der Validierung mindestens einer Bedingung für das Interlacing der genannten Modi berücksichtigt zu werden, die notwendig und vorbestimmt ist.

**5.** Verfahren nach Anspruch 4, wobei der Priorisierungsschritt (26) auch unter Berücksichtigung von Navigationsdaten und/oder mindestens einem externen Informationselement zu dem mindestens einen Radar durchgeführt wird, wobei das externe Informationselement zu der Gruppe gehört, die mindestens Folgendes umfasst:

- ein Informationselement, das von einem automatischen Identifikationssystem bereitgestellt wird,
- ein Element der Wetterinformation,
- ein Element des Seestands,
- ein Informationselement, das von einem Datenverknüpfungssystem bereitgestellt wird.

**6.** Verfahren nach einem der vorhergehenden Ansprüche, bei dem die Bestimmung eines Nutzwerts pro abzudeckendem Radarsektor, der für den Nutzen jedes Ziels der Mission repräsentativ ist, das mit jedem der Modi verbunden ist, die durch den Schritt der Bestimmung der Radarmodi bereitgestellt werden, auf einem Fuzzy-Logic-System basiert.

**7.** Verfahren nach Anspruch 6, bei dem das Fuzzy-Logic-System durch verstärkendes Lernen trainierbar ist.

**8.** Verfahren nach Anspruch 6 oder 7, bei dem mindestens ein vorbestimmtes Merkmal jedes Modus als Eintrag in einen Baum des genannten Fuzzy-Logic-Systems verwendet wird, wobei das mindestens eine Merkmal zu der Gruppe gehört, die für jeden Modus umfasst:

- die geschätzte Entdeckungswahrscheinlichkeit,
- die minimal erfassbare äquivalente Radarfläche, die in Abhängigkeit von der mit jedem Sektor verbundenen Entfernung, Erhebung und Peilung geschätzt wird;
- eine Information, die repräsentativ für die tatsächliche Nutzung oder Nichtnutzung der Hauptkeulen bei 3dB der maximalen Sendeleistung des mindestens einen Radars ist;
- Deckungsbedarf der Mission;
- die Formfaktoren jedes Modus;
- ein Paar instrumentierte Mindest- und Höchstentfernungen;
- ein Bodenerkennungsabdruck, der dem Modus zugeordnet ist, als Funktion der Höhe des Radars;
- eine dem genannten Modus zugeordnete Abdeckungsfähigkeit pro Zieltyp des genannten Radars,
- eine Beobachtungszeit pro Stufe;
- eine Information, die repräsentativ für die Leichtigkeit des genannten Modus ist, interlaced zu werden, wobei die genannte Information durch Vergleich der Zyklusdauer des genannten Modus mit den zugehörigen minimalen und maximalen Wiederbesuchszeiten erhalten wird;
- eine Erhebungsfähigkeit;

und/oder wobei mindestens eine Betriebsinformation von jedem der Radarmodi als Eingabe in den Baum des Fuzzy-Logik-Systems verwendet wird, wobei die mindestens eine Betriebsinformation zu der Gruppe gehört, die Folgendes umfasst:

- eine Anzeige des Verbrauchs der Rechen- und Speicherressourcen jedes der Radarmodi relativ zu den maximalen Kapazitäten des Radars;
- eine Betriebstemperatur des Radars;
- eine Angabe des Energieverbrauchs infolge der Verwendung jedes dieser Radarmodi;
- eine Angabe der Entwicklung der mittleren Zeit bis zum Ausfall infolge der Verwendung jedes der genannten Radarmodi.

**9.** Computerprogramm, umfassend Softwareanweisungen, die, wenn sie von einem Computer ausgeführt werden, die Entscheidungs- und Bewertungsverfahren zum Interlacing einer Vielzahl von Modi mindestens eines Radars nach einem der vorherigen Ansprüche durchführen.

**10.** Elektronische Vorrichtung zur Entscheidung und Bewertung des Interlacing einer Vielzahl von Radarmodi mindestens eines Radars, das geeignet ist, an Bord eines Fahrzeugs, insbesondere eines Luftfahrzeugs, mitgeführt zu werden, oder geeignet ist, an Bord einer Vorrichtung zur Simulation des Verhaltens des genannten Fahrzeugs eingesetzt zu werden, **dadurch gekennzeichnet, dass** die elektronische Vorrichtung zur Entscheidung und Bewertung des Interlacing von Radarmodi umfasst:

- ein Beschaffungsmodul, das so konfiguriert ist, dass es eine auszuführende Radarmission erhält, wobei die Mission mindestens ein zu erfüllendes Ziel umfasst;
- ein erstes Bestimmungsmodul, das konfiguriert ist, um gemäß einem ersten Satz von vorbestimmten Einschränkungen Radarmodi zu bestimmen, die geeignet sind, mindestens ein Ziel der genannten Radarmission zu erfüllen;
- ein zweites Bestimmungsmodul, das konfiguriert ist, um einen Nutzwert pro abzudeckendem Radarsektor zu bestimmen, der repräsentativ für den Nutzen für jedes Ziel der Mission ist, die mit jedem der Modi verbunden ist, die durch den Schritt der Bestimmung von Radarmodi bereitgestellt werden;
- ein Verifizierungsmodul, das so konfiguriert ist, dass es zumindest anhand der Modi und ihrer jeweiligen Nutzwerte die Validierung von mindestens einer ersten Bedingung für das Interlacing der Modi, die notwendig und vorbestimmt ist, verifiziert;
- ein Wiederholungsmodul, das konfiguriert ist, um das erste Bestimmungsmodul anzuweisen, die Bestimmung von Radarmodi gemäß einem von Iteration zu Iteration geänderten Satz von Beschränkungen zu wiederholen, wenn die mindestens eine erste Interlacing-Bedingung ungültig wird;
- ein drittes Bestimmungsmodul, das so konfiguriert ist, dass es versucht, die Interlacing-Reihenfolge der Modi zu bestimmen, wenn die mindestens eine erste Interlacing-Bedingung bestätigt wird, und um:

  - im Falle eines Fehlschlags des Versuchs, die Sequenz zu bestimmen, das Verifizierungsmodul anzuweisen, die Verifizierung für mindestens eine zweite Bedingung für das Interlacing der notwendigen und vorbestimmten Modi, die geändert ist in Bezug auf die mindestens eine erste Interlacing-Bedingung, zu wiederholen und parallel dazu, um das erste Bestimmungsmodul anzuweisen, die Bestimmung von Radarmodi gemäß einem Satz von Interlacing, der von Iteration zu Iteration geändert wurde, zu wiederholen;
- bei Erfolg des Versuchs, die Sequenzierung zu bestimmen, die Sequenzierung zu erhalten.

## Claims

1. A method for deciding on and evaluating the interleaving of several radar modes of at least one radar suitable for being carried on board a vehicle, in particular an aircraft, or suitable for being used on board a device for simulating the behaviour of the said vehicle, the said method being implemented by an electronic device for deciding on and evaluating the interleaving of radar modes, the method comprising the following successive steps:

   - obtaining (12) a radar mission to be carried out, said mission comprising at least one objective to be fulfilled;
   - determination (14), according to a first set of predetermined constraints, of radar modes suitable for meeting at least one objective of said radar mission;

   the process being **characterised in that** it further comprises the following successive and hierarchical steps:

   - determination (16) of a utility value, per radar sector to be covered, representative of the utility for each objective of said mission associated with each of said modes provided by the radar mode determination step;
   - at least on the basis of the said modes and their respective utility value, verification (18) of the validation of at least a first necessary and predetermined condition for interleaving the said modes:

     - in the event of invalidation of said at least one first interleaving condition, repetition of said method starting from the step of determining radar modes according to a set of constraints modified from one iteration to the next; or
     - if said at least one first interleaving condition is validated, an attempt is made (20) to determine the interleaving sequencing of said modes:

       - in the event of failure of said attempt to determine said sequencing, reiteration of said method starting from the verification step for at least one second interleaving condition of said necessary and predetermined modes modified with respect to said at least one first interleaving condition, and in parallel repeating said method from the step of determining radar modes according to a set of constraints modified from one iteration to the next;
       - if said attempt to determine said sequencing is successful, obtaining said sequencing.

2. A method according to claim 1 further comprising, after determination of the said sequencing, a step (22) of calculating the radar resources and times remaining available after application of the said sequencing, and as a function of the result of the said calculation, reiteration of the said method from the step of determining radar modes.

3. A method according to claim 1 or 2, further comprising a step (24) of determining, per radar sector to be covered, a cost associated with each mode provided by the step of determining radar modes, each cost also being able to be taken into account during the said step of verifying the validation of at least one necessary and predetermined condition for interleaving the said modes.

4. A method according to any one of the preceding claims, further comprising a step (26) of prioritising radar sectors to be used, the prioritisation being determined at least as a function of said mission, the priority of each sector being suitable for also being taken into account during said step of verifying the validation of at least one necessary and predetermined condition for interleaving said modes.

5. A method according to claim 4, wherein said prioritization step (26) is implemented also taking into account navigation data and/or at least one piece of information external to said at least one radar, the piece of external information belonging to the group comprising at least:

   - an item of information supplied by an automatic identification system,
   - an element of meteorological information,
   - an element of sea state,
   - an item of information supplied by a data link system.

6. A method according to any one of the preceding claims in which the determination of a utility value, per radar sector to be covered, representative of the utility for each objective of the said mission associated with each of the said modes provided by the step of determining radar modes is based on a fuzzy logic system.

7. A method according to claim 6 in which the fuzzy logic system is trainable by reinforcement learning.

8. A method according to claim 6 or 7, wherein at least one predetermined characteristic of each mode is used as input to a tree of said method fuzzy logic system, said at least one characteristic belonging to the group comprising, for each mode:

- the estimated probability of detection,
- the minimum detectable radar equivalent area estimated as a function of the distance, elevation and bearing associated with each sector;
- information representative of the actual use or lack of use of the main lobes within 3dB of the maximum transmitted power of said at least one radar;
- mission coverage requirements;
- the form factors for each mode;
- a pair of minimum and maximum instrumented distances;
- a ground detection footprint associated with said mode as a function of the altitude of said radar;
- a coverage capacity associated with said mode, per type of target of said radar,
- observation time by degree;
- information representative of the ease with which said mode can be interlaced, said information being obtained by comparing the cycle time of said mode with the associated minimum and maximum revisit times;
- elevation capacity;

and/or wherein at least one piece of operating information of each of said radar modes is used as input to said tree of said fuzzy logic system, said at least one piece of operating information belonging to the group comprising:

- an indication of the consumption of the computing and memory resources of each of the said radar modes relative to the maximum capacities of the said radar;
- an operating temperature of said radar;
- an indication of the energy consumption resulting from the use of each of the said radar modes;
- an indication of the change in mean time to failure resulting from the use of each of the said radar modes.

9. A computer program comprising software instructions which, when executed by a computer, implement the method of deciding and evaluating the interleaving of several radar modes of at least one radar according to any one of the preceding claims.

10. Electronic device for deciding on and evaluating the interleaving of several radar modes of at least one radar suitable for being carried on board a vehicle, in particular an aircraft, or suitable for being implemented on board a device for simulating the behaviour of the said vehicle, **characterised in that** the electronic device for deciding on and evaluating the interleaving of radar modes comprises:

- an acquisition module configured to acquire a radar mission to be carried out, said mission comprising at least one objective to be fulfilled;
- a first determination module configured to determine, according to a first set of predetermined constraints, radar modes suitable for meeting at least one objective of said radar mission;
- a second determination module configured to determine a utility value, per radar sector to be covered, representative of the utility for each objective of said mission associated with each of said modes provided by the radar mode determination step;
- a verification module configured to verify, at least on the basis of said modes and their respective utility value, the validation of at least a first necessary and predetermined condition for interleaving said modes;
- a reiteration module configured to instruct the first determination module to reiterate the determination of radar modes, according to a set of constraints modified from one iteration to the next, in the event of invalidation of said at least one first interleaving condition;
- a third determination module, configured to attempt to determine the interleaving sequencing of said modes in the event of validation of said at least one first interleaving condition, and to:

- in the event of failure of said attempt to determine said sequencing, instructing the verification module to reiterate the verification for at least one second interleaving condition of said necessary and predetermined modes modified with respect to said at least one first interleaving condition, and in parallel to instruct the first determination module to reiterate the determination of radar modes according to a set of constraints modified from one iteration to the other;
- if said attempt to determine said sequencing is successful, obtain said sequencing.

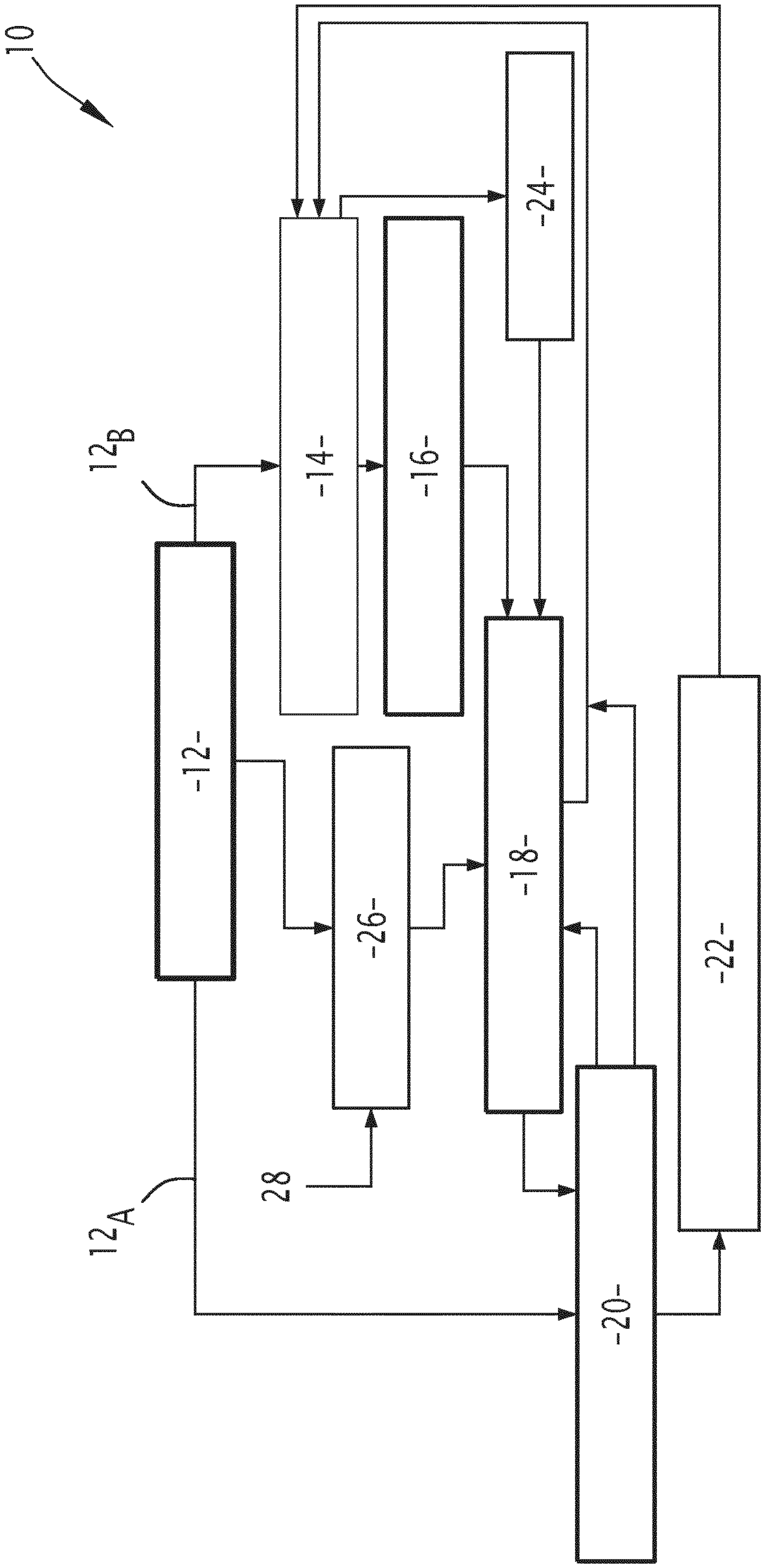


FIG.1

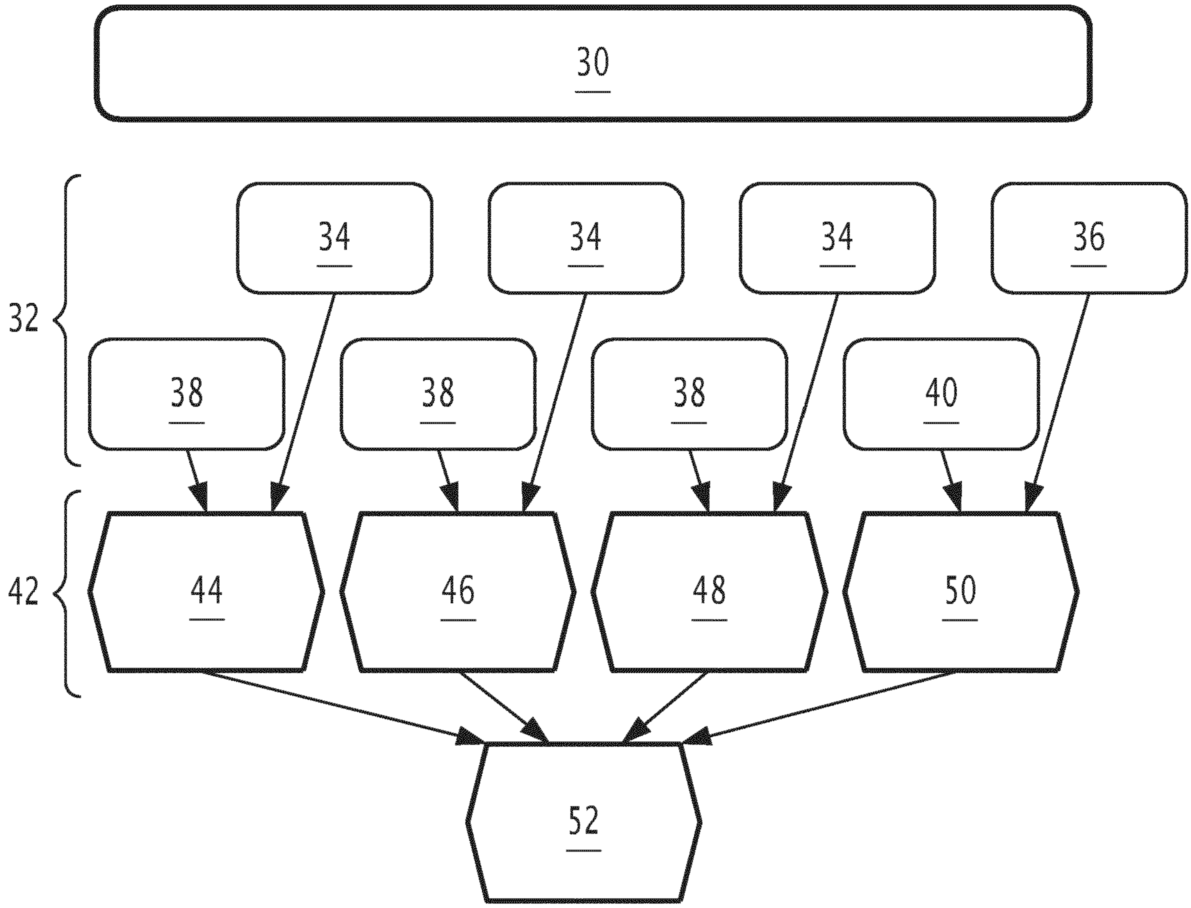


FIG.2

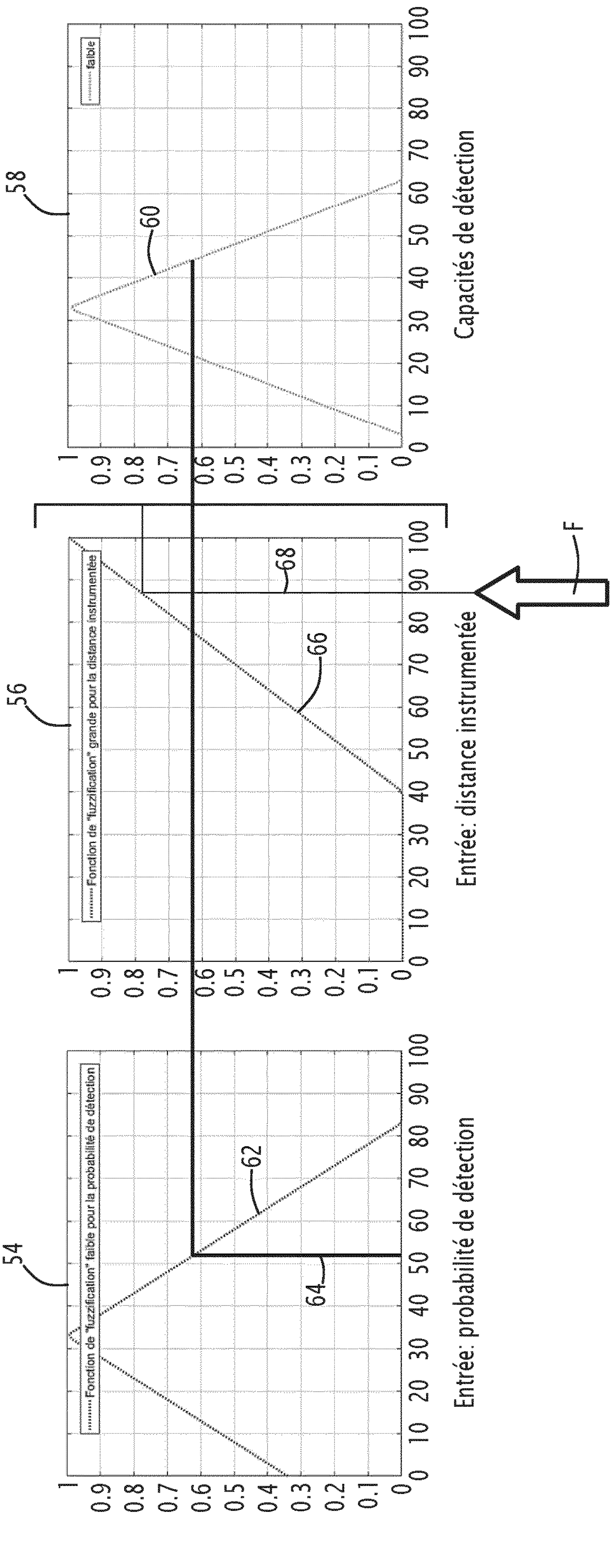

54
56
58
60
62
64
66
68
F
Fonction de "fuzzification" faible pour la probabilité de détection
Fonction de "fuzzification" grande pour la distance instrumentée
faible
Entrée: probabilité de détection
Entrée: distance instrumentée
Capacités de détection
0 10 20 30 40 50 60 70 80 90 100
0 0.1 0.2 0.3 0.4 0.5 0.6 0.7 0.8 0.9 1


FIG.3

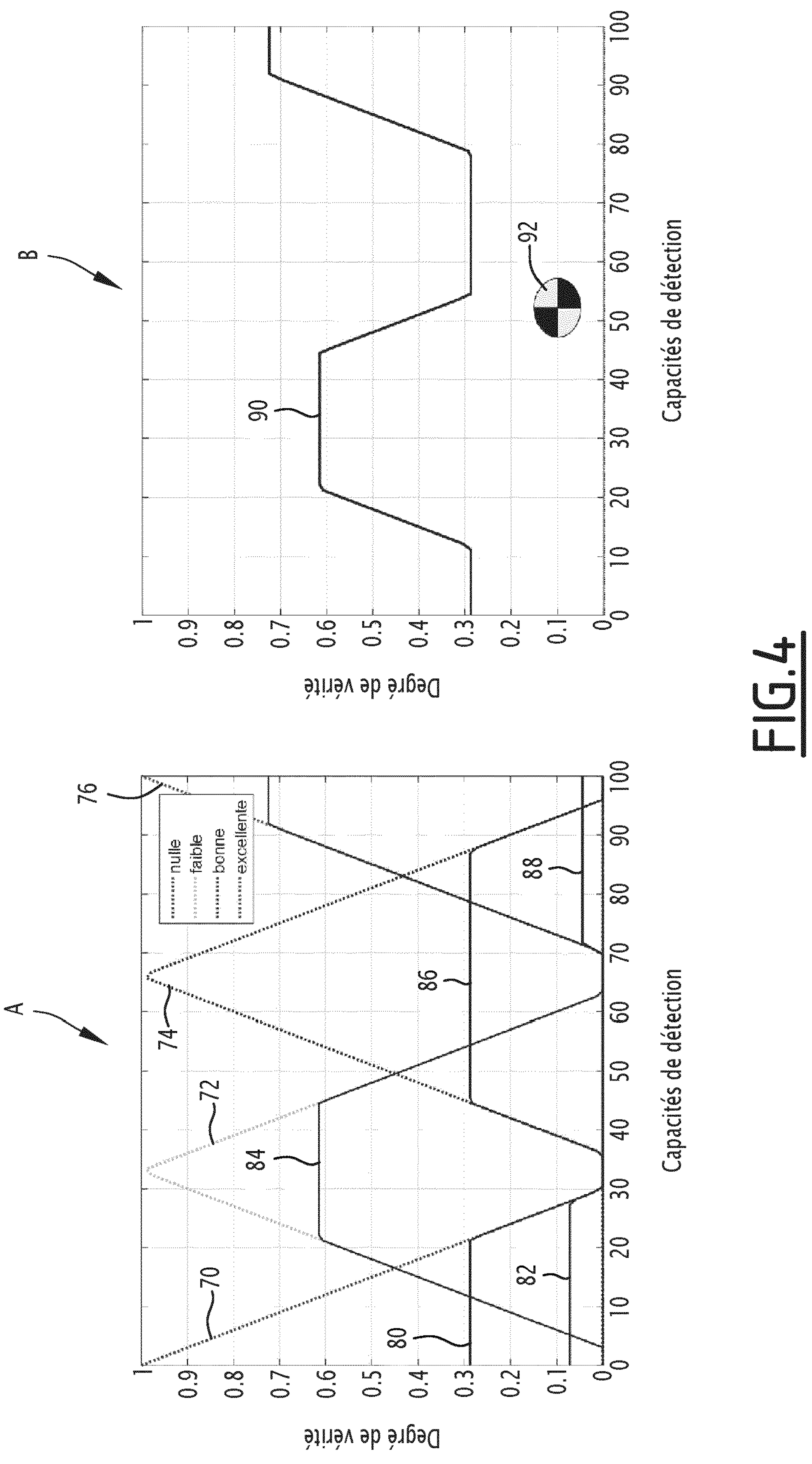
A
B
nulle
faible
bonne
excellente
Degré de vérité
Capacités de détection
70
72
74
76
80
82
84
86
88
90
92

FIG.4

| | S1 | S2 | S3 | S4 | S5 | S6 | S7 | S8 | S9 | S10 | S11 | S12 |
|---|---|---|---|---|---|---|---|---|---|---|---|---|
| M1 | 1 | 1 | 1 | 1 | 1 | 0 | 0 | 1 | 1 | 1 | 1 | 1 |
| M2 | 1 | 1 | 1 | 1 | 1 | 1 | 1 | 1 | 1 | 1 | 1 | 1 |
| M3 | 0 | 0 | 0 | 0 | 0 | 0 | 0 | 0 | 0 | 0 | 0 | 0 |

| | | S1 | S2 | S3 | S4 | S5 | S6 | S7 | S8 | S9 | S10 | S11 | S12 |
|---|---|---|---|---|---|---|---|---|---|---|---|---|---|
| Coût secteur | (%) | 0.09 | 0.09 | 0.09 | 0.09 | 0.09 | 0.03 | 0.03 | 0.09 | 0.09 | 0.09 | 0.09 | 0.09 |
| Coût total : | 98.1 % | | | | | | | | | | | | |

FIG.5

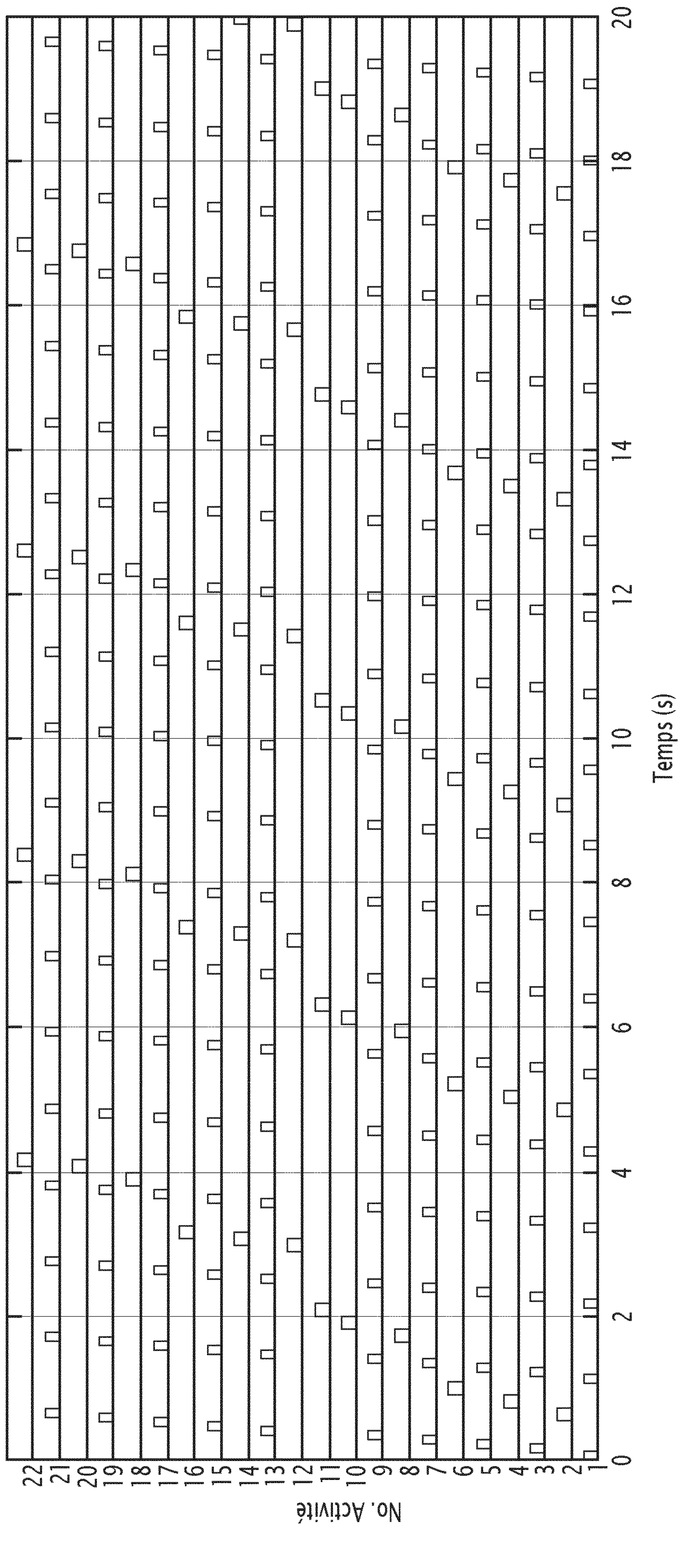
Temps (s)
No. Activité
0
2
4
6
8
10
12
14
16
18
20
1
2
3
4
5
6
7
8
9
10
11
12
13
14
15
16
17
18
19
20
21
22

FIG.6

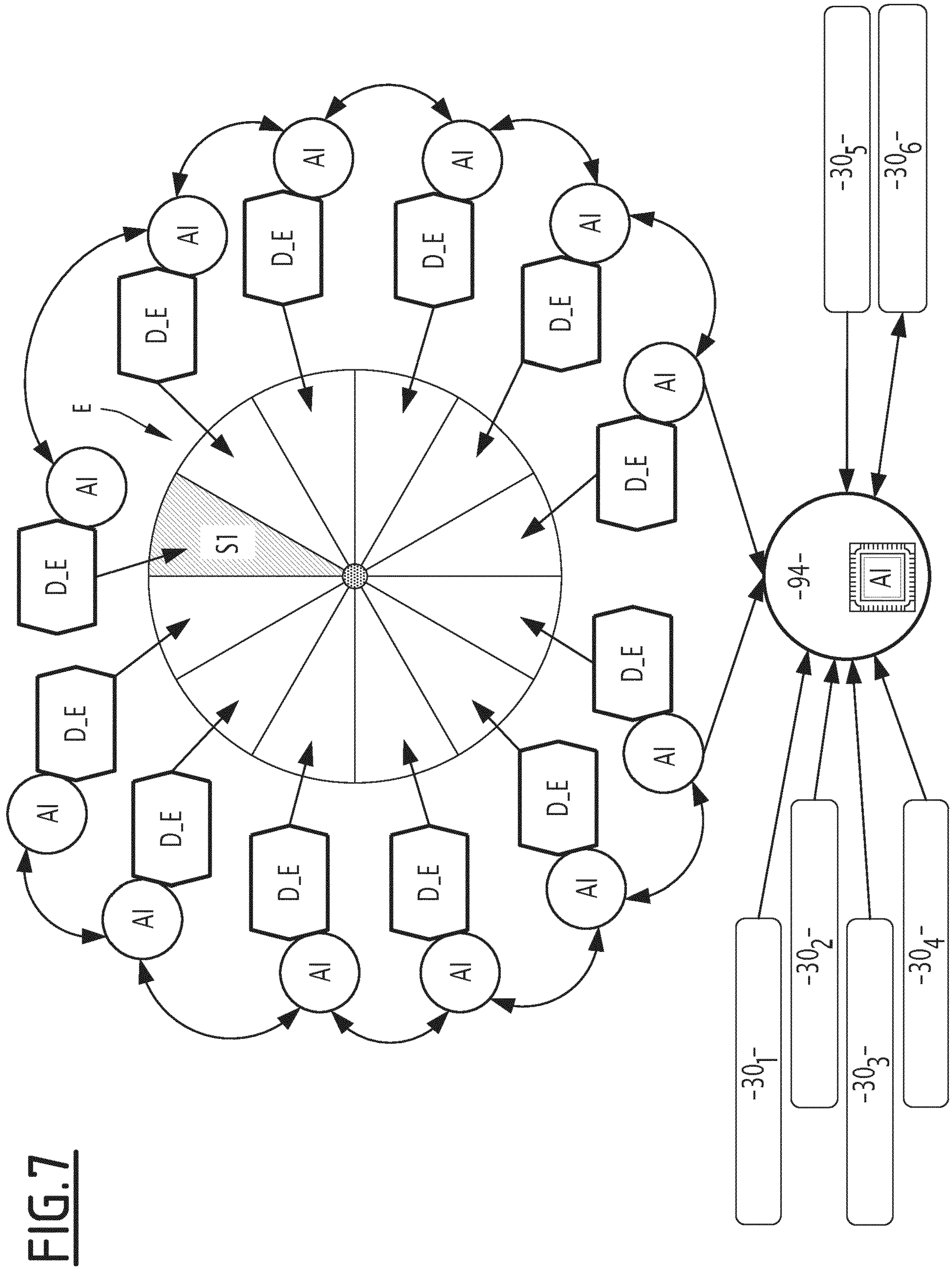


FIG.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2018067221 A1
- EP 1314999 B1